# EUROPÄISCHE PATENTSCHRIFT

(11) **EP 3 667 260 B1**
(45) Veröffentlichungstag und Bekanntmachung des Hinweises auf die Patenterteilung: **13.07.2022**
(21) Anmeldenummer: 18211309.2
(22) Anmeldetag: 10.12.2018
(51) Int. Cl.: G01F 23/00, G01F 23/288, G01F 25/00, G05B 19/042, G01N 9/24, G05B 23/02, G01T 1/208

(54) **RADIOMETRISCHES MESSGERÄT**
RADIOMETRIC MEASUREMENT APPARATUS
APPAREIL DE MESURE RADIOMÉTRIQUE

(43) Veröffentlichungstag der Anmeldung: 17.06.2020
(73) Patentinhaber: Berthold Technologies GmbH & Co. KG, 75323 Bad Wildbad (DE)
(72) Erfinder: Daibenzeiher, Tobias, 75217 Birkenfeld (DE); Freiburger, Ewald, 75245 Neulingen (DE); Müller, Steffen, 75173 Pforzheim (DE)
(74) Vertreter: Patentanwälte Ruff, Wilhelm, Beier, Dauster & Partner mbB

(56) Entgegenhaltungen:
- EP-A1- 2 584 379
- EP-A1- 3 064 910
- EP-A1- 3 064 910
- EP-A2- 0 742 505
- CN-A- 104 355 216
- DE-A1-102017 208 723
- D. MÖRMANN, H. J. GERBIG: "BITTE NICHT STÖREN", CHEMIE TECHNIK, 1 February 2006 (2006-02-01),

## Beschreibung

### ANWENDUNGSGEBIET UND STAND DER TECHNIK

Die Erfindung bezieht sich auf ein radiometrisches Messgerät zum Erfassen einer Messgröße in Form eines Füllstands, eines Grenzstands, einer Dichte und/oder eines Massenstroms.

Die EP 3 064 910 A1 bezieht sich auf einen radiometrischen Detektor zur Erfassung einer Messgröße, wobei der Detektor besonders ausfallsicher bei gleichzeitig einfachem, platzsparendem und kostengünstigem Aufbau ist, ohne Einbußen im Signal-Rausch-Verhältnis zu haben.

Des Weiteren offenbart die EP 0 742 505 A2 eine Einrichtung zum sicherheitsgerichteten Überwachen einer Maschine. Eine höchste Sicherheit zum Betrieb einer Maschine, insbesondere einer Werkzeugmaschine oder eines Roboters, wird bei zweikanaliger Überwachung dadurch erreicht, dass auch die Zustandsparameter getrennt eingeb-, speicher- und ausgebbar sind, dass ferner zwei getrennte Kanalvergleicher vorliegen und bei Abweichung vorgebbare Fehlerreaktionen anstoßbar sind.

Außerdem offenbart die CN 104355216 A ein Roll- bzw. Fahrtreppensteuersystem. Das Fahrtreppensteuersystem umfasst einen ersten Mikrocomputer und eine Fehlererfassungs- und Steuereinheit, wobei der erste Mikrocomputer zum sicheren Steuern einer Fahrtreppe verwendet wird; die Fehlererfassungs- und Steuereinheit ist unabhängig vom ersten Mikrocomputer; der erste Mikrocomputer umfasst eine erste Zentraleinheit, eine zweite Zentraleinheit und eine Redundanzsteuerungs- und -prüfungseinheit; die erste Zentraleinheit und die zweite Zentraleinheit betreiben jeweils ein Eingangssignal; die Redundanzkontroll- und Inspektionseinheit wird zum Vergleichen der Konsistenz der Betriebsergebnisse der ersten Zentraleinheit und der zweiten Zentraleinheit verwendet. Die Fehlererfassungs- und Steuereinheit dient zum Abschalten der Leistungsabgabe der Rolltreppe, wenn ein Vergleichsergebnis der Redundanzkontroll- und Inspektionseinheit eine Inkonsistenz darstellt. Der Entwicklungs- und Wartungsaufwand wird reduziert, und die Sicherheitsleistung kann verbessert werden.

Weiter offenbart die DE 10 2017 208 723 A1 ein radiometrisches Messgerät zum Messen eines Füllstands, eines Grenzstands, einer Dichte oder eines Durchflusses eines Mediums, welches zwei Szintillatoren und eine radioaktive Referenzstrahlungsquelle aufweist, die in oder unmittelbar neben dem zweiten Szintillator angeordnet ist, um Alterungseffekte und Temperaturdrifts zu korrigieren. Beide Szintillatoren sind seriell oder parallel angeordnet und geben ihr Licht an dieselbe Lichtdetektoranordnung ab.

Zudem offenbart die EP 2 584 379 A1 ein Verfahren zum Betreiben eines Szintillationszählers mit einem optischen Detektor in Form einer, insbesondere einer einzelnen, Avalanche-Photodiode oder eines Halbleiter-Photomultipliers aufweisend folgende Schritte: Durchführen einer automatischen Driftkompensation, wobei die automatische Driftkompensation die Schritte umfasst: Regeln eines Verhältnisses einer Zählrate von Ereignissen mit einer Energie, die größer als ein erster Schwellenwert ist, und einer Zählrate von Ereignissen mit einer Energie, die größer als ein zweiter Schwellenwert ist, auf eine vorgegebene erste Funktion, insbesondere auf einen vorgegebenen ersten Sollwert, und/oder Regeln einer Zählrate von Ereignissen mit einer Energie, die größer als ein dritter Schwellenwert ist, auf eine zweite vorgegebene Funktion, insbesondere auf einen zweiten Sollwert.

Zudem offenbart D. MÖRMANN, H. J. GERBIG: "BITTE NICHT STÖREN", CHEMIE TECHNIK, Februar 2006 eine Störstrahlunterdrückung bei der radiometrischen Füllstandsmessung.

### AUFGABE UND LÖSUNG

Der Erfindung liegt als Aufgabe die Bereitstellung eines radiometrisches Messgeräts zum Erfassen einer Messgröße in Form eines Füllstands, eines Grenzstands, einer Dichte und/oder eines Massenstroms zugrunde, das verbesserte Eigenschaften aufweist.

Die Erfindung löst diese Aufgabe durch die Bereitstellung eines radiometrisches Messgeräts mit den Merkmalen des Anspruchs 1. Vorteilhafte Weiterbildungen und/oder Ausgestaltungen der Erfindung sind in den abhängigen Ansprüchen beschrieben.

Das erfindungsgemäße, insbesondere elektrische, radiometrische Messgerät ist zum, insbesondere automatischen, Erfassen einer Messgröße, insbesondere eines Werts einer Messgröße, in Form eines Füllstands, eines Grenzstands, einer Dichte und/oder eines Massenstroms ausgebildet bzw. konfiguriert. Das radiometrische Messgerät weist, insbesondere nur, eine Szintillatoreinrichtung, insbesondere nur, eine optoelektronische Sensoreinrichtung, eine erste, insbesondere elektrische, Signalverarbeitungseinheit, eine einstellbare zweite, insbesondere elektrische, Signalverarbeitungseinheit, eine, insbesondere elektrische, Einstelleinheit und eine, insbesondere elektrische, Bewertungseinheit auf. Die Szintillatoreinrichtung ist dazu ausgebildet bzw. konfiguriert, insbesondere zeitlich kontinuierlich bzw. fortlaufend bzw. pausenfrei, bei Anregung durch ionisierende Strahlung Lichtimpulse zu erzeugen. Die optoelektronische Sensoreinrichtung ist dazu ausgebildet bzw. konfiguriert, insbesondere zeitlich kontinuierlich bzw. fortlaufend bzw. pausenfrei, die Lichtimpulse in, insbesondere mindestens, ein, insbesondere elektrisches Sensorsignal umzuwandeln, insbesondere automatisch. Die erste Signalverarbeitungseinheit ist dazu ausgebildet bzw. konfiguriert, insbesondere zeitlich kontinuierlich bzw. fortlaufend bzw. pausenfrei, das, insbesondere mindestens eine, Sensorsignal in ein erstes, insbesondere elektrisches, Messgrößensignal zu verarbeiten, insbesondere automatisch. Die zweite Signalverarbeitungseinheit ist dazu ausgebildet bzw. konfiguriert, insbesondere zeitlich kontinuierlich bzw. fortlaufend bzw. pausenfrei, das, insbesondere mindestens eine, Sensorsignal in einer Messeinstellung in ein zweites, insbesondere elektrisches, Messgrößensignal zu verarbeiten, insbesondere automatisch. Das zweite Messgrößensignal entspricht, insbesondere gleicht, dem ersten Messgrößensignal bei fehlerfrei verarbeitender erster Signalverarbeitungseinheit und fehlerfrei verarbeitender zweiter Signalverarbeitungseinheit. Des Weiteren ist die zweite Signalverarbeitungseinheit dazu ausgebildet bzw. konfiguriert, insbesondere zeitlich kontinuierlich bzw. fortlaufend bzw. pausenfrei, das, insbesondere mindestens eine, Sensorsignal in mindestens einer Betriebseinstellung in mindestens ein, insbesondere elektrisches, Betriebsgrößensignal zu verarbeiten, insbesondere automatisch. Das mindestens eine Betriebsgrößensignal entspricht den Messgrößensignalen nicht. Die Einstelleinheit ist dazu ausgebildet bzw. konfiguriert, die zweite Signalverarbeitungseinheit in, insbesondere vorgegebenen, Messgrößenzeitintervallen in die Messeinstellung und in mit den Messgrößenzeitintervallen abwechselnden, insbesondere vorgegebenen, Betriebsgrößenzeitintervallen in die mindestens eine Betriebseinstellung einzustellen, insbesondere automatisch. Die Bewertungseinheit ist dazu ausgebildet bzw. konfiguriert, insbesondere zeitlich kontinuierlich bzw. fortlaufend bzw. pausenfrei, das erste Messgrößensignal, insbesondere einen Wert des ersten Messgrößensignals, und das zweite Messgrößensignal, insbesondere einen Wert des zweiten Messgrößensignal, insbesondere soweit vorhanden, miteinander zu vergleichen, insbesondere automatisch, und in Abhängigkeit von einem Ergebnis des Vergleichs die erste Signalverarbeitungseinheit und/oder die zweite Signalverarbeitungseinheit als fehlerfrei oder fehlerhaft verarbeitend zu bewerten, insbesondere automatisch.

Einerseits ermöglicht dies, insbesondere die einstellbare zweite Signalverarbeitungseinheit und die Einstelleinheit bzw. das zweite Messgrößensignal und das mindestens eine Betriebsgrößensignal ermöglichen, einen relativ großen Funktionsumfang des radiometrischen Messgeräts, insbesondere bei nur zwei Signalverarbeitungseinheiten.

Andererseits ermöglicht dies, insbesondere die erste Signalverarbeitungseinheit, die zweite Signalverarbeitungseinheit und die Bewertungseinheit bzw. der Vergleich des ersten Messgrößensignal und des zweiten Messgrößensignals und die Bewertung ermöglichen, eine funktionale Sicherheit, insbesondere eines Sicherheits-Integritätslevels bzw. einer Sicherheitsanforderungsstufe von mindestens SIL2 (Englisch: safety integrity level; Abkürzung: SIL), des radiometrischen Geräts, insbesondere bei nur zwei Signalverarbeitungseinheiten. Insbesondere kann die funktionale Sicherheit in der Prozessindustrie vorteilhaft sein.

Insbesondere kann das radiometrische Messgerät nur die erste Signalverarbeitungseinheit und die zweite Signalverarbeitungseinheit aufweisen. Dies kann einen relativ niedrigen Energieverbrauch des radiometrischen Messgeräts ermöglichen. Alternativ kann das radiometrische Messgerät zusätzlich zu der ersten Signalverarbeitungseinheit und der zweiten Signalverarbeitungseinheit mindestens eine weitere Signalverarbeitungseinheit aufweisen.

Insbesondere bei nur zwei Signalverarbeitungseinheiten, kann zwar für die, insbesondere sequentielle, Verarbeitung in das zweite Messgrößensignal, insbesondere in den Messgrößenzeitintervallen, und in das mindestens eine Betriebsgrößensignal, insbesondere in den Betriebsgrößenzeitintervallen, mehr Zeit benötigt werden als mit parallel ausgeführten Strukturen, insbesondere mit mehr als zwei Signalverarbeitungseinheiten, insbesondere die einen relativ höheren Energieverbrauch haben können. Jedoch kann oder braucht die Mehrzeit, soweit benötigt, nicht nachteilhaft sein. Insbesondere dann, wenn das mindestens eine Betriebsgrößensignal nicht allzu häufig zur Verfügung stehen braucht, z.B. da mindestens eine Größe, insbesondere mindestens eine Störgröße, von welcher das mindestens eine Betriebsgrößensignal, insbesondere mindestens ein Wert des mindestens einen Betriebsgrößensignal, abhängen kann, die Eigenschaft haben kann, sich nicht kurzzeitig zu verändern. Zusätzlich oder alternativ können oder brauchen die Messgrößenzeitintervalle nur so lang sein bzw. dauern, dass der Vergleich und die Bewertung bzw. die funktionale Sicherheit gewährleistet sein können bzw. kann.

Insbesondere können die erste Signalverarbeitungseinheit und die zweite Signalverarbeitungseinheit, insbesondere jeweils, als Signalverarbeitungskanal bzw. Signalverarbeitungspfad bezeichnet werden. Weiter zusätzlich oder alternativ können die erste Signalverarbeitungseinheit und die zweite Signalverarbeitungseinheit verschieden sein. Weiter zusätzlich oder alternativ können das erste Messgrößensignal und das zweite Messgrößensignal verschieden sein. Weiter zusätzlich oder alternativ können die Messeinstellung und die mindestens eine Betriebseinstellung verschieden sein. Weiter zusätzlich oder alternativ kann die zweite Signalverarbeitungseinheit dazu ausgebildet sein, zu einem Zeitpunkt, insbesondere entweder, in der Messeinstellung oder in der mindestens einen Betriebseinstellung eingestellt zu sein. Weiter zusätzlich oder alternativ kann die zweite Signalverarbeitungseinheit dazu ausgebildet sein, zu einem Zeitpunkt das Sensorsignal, insbesondere entweder, in das zweite Messgrößensignal oder in das mindestens eine Betriebsgrößensignal zu verarbeiten. Weiter zusätzlich oder alternativ kann die Einstelleinheit dazu ausgebildet sein, zu einem Zeitpunkt die zweite Signalverarbeitungseinheit, insbesondere entweder, in die Messeinstellung oder in die mindestens eine Betriebseinstellung einzustellen. Weiter zusätzlich oder alternativ können die Messgrößenzeitintervalle und die Betriebsgrößenzeitintervalle verschieden sein. Weiter zusätzlich oder alternativ können die Messgrößenzeitintervalle und die Betriebsgrößenzeitintervalle, insbesondere jeweils, auf Englisch als "time slots" bezeichnet werden.

Weiter zusätzlich oder alternativ kann die Einstelleinheit eine Zeitbestimmungs- und/oder Messeinheit aufweisen, wie z.B. eine Uhr und/oder einen Oszillator.

Weiter zusätzlich oder alternativ kann die Bewertungseinheit dazu ausgebildet sein, das erste Messgrößensignal und das zweite Messgrößensignal unmittelbar oder mittelbar, insbesondere mittels Vergleichs von auf dem ersten Messgrößensignal und dem zweiten Messgrößensignal, insbesondere jeweils, basierenden Signalen, miteinander zu vergleichen. Weiter zusätzlich oder alternativ kann die Bewertungseinheit eine Auswahllogik (Englisch: voting logic), insbesondere eine 1oo2 (Englisch: 1 out of 2) Auswahllogik, aufweisen, insbesondere sein. Insbesondere bei fehlerfrei verarbeitender erster Signalverarbeitungseinheit und fehlerfrei verarbeitender zweiter Signalverarbeitungseinheit bzw. in dem Fall, dass die erste Signalverarbeitungseinheit und die zweite Signalverarbeitungseinheit, insbesondere jeweils, fehlerfrei verarbeiten, dann können das erste Messgrößensignal und das zweite Messgrößensignal, insbesondere im zeitlichen Mittel, insbesondere linear, miteinander verknüpft sein, insbesondere vergleichbar sein bzw. einander entsprechen, insbesondere gleichen. Bei fehlerhaft verarbeitender erster Signalverarbeitungseinheit und/oder fehlerhaft verarbeitender zweiter Signalverarbeitungseinheit bzw. in dem Fall, dass die erste Signalverarbeitungseinheit und/oder die zweite Signalverarbeitungseinheit, insbesondere jeweils, fehlerhaft verarbeiten/verarbeitet, dann können oder brauchen das erste Messgrößensignal und das zweite Messgrößensignale, insbesondere im zeitlichen Mittel, nicht miteinander verknüpft sein, insbesondere unvergleichbar sein bzw. einander nicht entsprechen bzw. voneinander abweichen. Insbesondere kann die Bewertungseinheit dazu ausgebildet sein, bei einer Abweichung von weniger als oder gleich zehn Prozent (%), die erste Signalverarbeitungseinheit und die zweite Signalverarbeitungseinheit, insbesondere jeweils, als fehlerfrei verarbeitend zu bewerten, und bei einer Abweichung von mehr als zehn % als fehlerhaft verarbeitend zu bewerten. Weiter zusätzlich oder alternativ kann die Bewertungseinheit dazu ausgebildet sein, falls kein aktuelles zweites Messgrößensignal vorhanden ist bzw. zur Verfügung steht, insbesondere in den Betriebsgrößenzeitintervallen, das zeitlich letzte zweite Messgrößensignal und das erste Messgrößensignal miteinander zu vergleichen und/oder das zeitlich letzte Vergleichsergebnis zu verwenden und/oder die zeitlich letzte Bewertung zu verwenden, insbesondere bis zum zeitlich nächsten Messgrößenzeitintervall. Weiter zusätzlich oder alternativ kann die Bewertungseinheit eine CPU bzw. einen Mikrokontroller bzw. einen Signalprozessor aufweisen, insbesondere sein.

Weiter zusätzlich oder alternativ können die Szintillatoreinrichtung und/oder die optoelektronische Sensoreinrichtung, insbesondere jeweils, aufgrund ihrer charakteristischen Eigenschaft bzw. Naturgesetzmäßigkeit durch das radiometrische Messgerät, insbesondere die Bewertungseinheit, als fehlerfrei oder fehlerhaft erzeugend und/oder umwandelnd bewertet werden. Weiter zusätzlich oder alternativ kann die ionisierende Strahlung, insbesondere eine Intensität der ionisierenden Strahlung, von der Messgröße abhängen. Insoweit sei auch auf die einschlägige Fachliteratur verwiesen.

Weiter zusätzlich oder alternativ kann die optoelektronische Sensoreinrichtung mit der Szintillatoreinrichtung, insbesondere optisch, gekoppelt sein. Weiter zusätzlich oder alternativ kann die erste Signalverarbeitungseinheit mit der optoelektronischen Sensoreinrichtung, insbesondere elektrisch, gekoppelt sein. Weiter zusätzlich oder alternativ kann die zweite Signalverarbeitungseinheit mit der optoelektronischen Sensoreinrichtung, insbesondere elektrisch, gekoppelt sein. Weiter zusätzlich oder alternativ kann die Einstelleinheit mit der zweiten Signalverarbeitungseinheit, insbesondere elektrisch, gekoppelt sein. Weiter zusätzlich oder alternativ kann die Bewertungseinheit mit der ersten Signalverarbeitungseinheit und/oder der zweiten Signalverarbeitungseinheit, insbesondere elektrisch, gekoppelt sein.

Das erste Messgrößensignal und das zweite Messgrößensignal weisen jeweils eine, insbesondere erste oder zweite, Messinformation, insbesondere einen Wert der Messinformation, auf. Zusätzlich weist das mindestens eine Betriebsgrößensignal eine Regelinformation, insbesondere einen Wert der Regelinformation, eine Rauschkantenpositionsinformation, insbesondere einen Wert der Rauschkantenpositionsinformation, eine Hochtemperatur-Messinformation, insbesondere einen Wert der Hochtemperatur-Messinformation, und/oder eine Höhenstrahlinformation, insbesondere einen Wert der Höhenstrahlinformation, auf. Die Regelinformation kann von einer auszuregelnden Störgröße abhängen. Dies ermöglicht den relativ großen Funktionsumfang des radiometrischen Messgeräts, insbesondere innerhalb von einem Messgrößenzeitintervall und maximal vier Betriebsgrößenzeitintervallen, insbesondere einem Regel-Betriebsgrößenzeitintervall, einem Rauschkantenpositions-Betriebsgrößenzeitintervall, einem Hochtemperatur-Betriebsgrößenzeitintervall und/oder einem Höhenstrahl-Betriebsgrößenzeitintervall. Insbesondere ermöglicht die Höhenstrahlinformation, die Szintillatoreinrichtung und/oder die optoelektronische Sensoreinrichtung, insbesondere jeweils, als fehlerfrei oder fehlerhaft erzeugend und/oder umwandelnd bewerten zu können. Weiter zusätzlich oder alternativ brauchen/braucht die Rauschkantenpositionsinformation und/oder die Regelinformation nicht allzu häufig zur Verfügung stehen, da die auszuregelnde/n Störgröße/n, von welcher/welchen die Rauschkantenpositionsinformation und/oder die Regelinformation abhängen können, die Eigenschaft haben können/kann, sich nicht kurzzeitig zu verändern, insbesondere da sie wesentlich von Temperatureinflüssen und/oder Alterungseffekten abhängen können/kann. Weiter zusätzlich oder alternativ kann eine, insbesondere jeweilige, Zeitdauer des Messgrößenzeitintervalls, des Regel-Betriebsgrößenzeitintervalls, des Rauschkantenpositions-Betriebsgrößenzeitintervalls, des Hochtemperatur-Betriebsgrößenzeitintervalls und/oder des Höhenstrahl-Betriebsgrößenzeitintervalls an die jeweilige Aufgabe angepasst sein. Z.B. kann die Zeitdauer des Regel-Betriebsgrößenzeitintervalls länger sein. Dies kann ermöglichen, dass eine Bias-Spannungsregelung eine bessere Statistik besitzen kann. Weiter zusätzlich oder alternativ kann die Bewertungseinheit dazu ausgebildet sein, die erste Messinformation und die zweite Messinformation miteinander zu vergleichen. Weiter zusätzlich oder alternativ kann, falls die erste Signalverarbeitungseinheit einstellbar ausgebildet ist, das erste Betriebsgrößensignal eine erste Hochtemperatur-Messinformation, insbesondere einen Wert der ersten Hochtemperatur-Messinformation, aufweisen. Zusätzlich kann die Bewertungseinheit dazu ausgebildet sein, das erste Betriebsgrößensignal aufweisend die erste Hochtemperatur-Messinformation und das, insbesondere zweite, Betriebsgrößensignal aufweisend die, insbesondere zweite, Hochtemperatur-Messinformation miteinander zu vergleichen. Weiter zusätzlich oder alternativ kann das radiometrische Messgerät einen Temperaturmesseinrichtung aufweisen, insbesondere einen Temperatursensor.

In einer Weiterbildung der Erfindung ist die Einstelleinheit dazu ausgebildet, die zweite Signalverarbeitungseinheit, insbesondere periodisch, wiederholend in die Messeinstellung und in die mindestens eine Betriebseinstellung einzustellen. In anderen Worten: ein Messgrößenzeitintervall und ein Betriebsgrößenzeitintervall können sich, insbesondere periodisch, wiederholend abwechseln. Dies kann ermöglichen, dass die funktionale Sicherheit und der Funktionsumfang des radiometrischen Geräts zeitlich kontinuierlich bzw. fortlaufend bzw. pausenfrei gewährleistet sein können.

In einer Weiterbildung der Erfindung ist die erste Signalverarbeitungseinheit dazu ausgebildet, das Sensorsignal aus einem Zeitfenster in das erste Messgrößensignal zu verarbeiten. Die zweite Signalverarbeitungseinheit ist dazu ausgebildet, dasselbe Sensorsignal aus demselben Zeitfenster in der Messeinstellung in das zweite Messgrößensignal zu verarbeiten. Die Einstelleinheit ist dazu ausgebildet, die zweite Signalverarbeitungseinheit zeitweise in die Messeinstellung derart einzustellen, dass die zweite Signalverarbeitungseinheit dasselbe Sensorsignal aus demselben Zeitfenster in das zweite Messgrößensignal verarbeitet. Die Bewertungseinheit ist dazu ausgebildet, das erste Messgrößensignal und das zweite Messgrößensignal verarbeitet aus demselben Sensorsignal aus demselben Zeitfenster miteinander zu vergleichen. Dies ermöglicht eine relativ gute Vergleichbarkeit des ersten Messgrößensignals und des zweiten Messgrößensignals.

In einer Weiterbildung der Erfindung ist die erste Signalverarbeitungseinheit dazu ausgebildet, das, insbesondere mindestens eine, Sensorsignal ausschließlich bzw. nur in das erste Messgrößensignal zu verarbeiten. Dies ermöglicht, dass die ganze Zeit das erste Messgrößensignal vorhanden sein bzw. zur Verfügung stehen kann und/oder dass das radiometrische Messgerät, insbesondere die erste Signalverarbeitungseinheit, relativ einfach ausgebildet sein kann. Insbesondere kann oder braucht nicht die erste Signalverarbeitungseinheit einstellbar ausgebildet sein und/oder dazu ausgebildet sein, das Sensorsignal in einer Messeinstellung in das erste Messgrößensignal und in mindestens einer Betriebseinstellung in mindestens ein Betriebsgrößensignal zu verarbeiten. Zusätzlich oder alternativ kann oder braucht nicht die Einstelleinheit mit der ersten Signalverarbeitungseinheit, insbesondere unmittelbar, gekoppelt sein und/oder dazu ausgebildet sein, die erste Signalverarbeitungseinheit in Messgrößenzeitintervallen in die Messeinstellung und in mit den Messgrößenzeitintervallen abwechselnden Betriebsgrößenzeitintervallen in die mindestens eine Betriebseinstellung einzustellen. Alternativ kann die erste Signalverarbeitungseinheit einstellbar ausgebildet sein und dazu ausgebildet sein, das Sensorsignal in einer Messeinstellung in das erste Messgrößensignal und in mindestens einer Betriebseinstellung in mindestens ein erstes Betriebsgrößensignal zu verarbeiten. Die Einstelleinheit kann mit der ersten Signalverarbeitungseinheit, insbesondere elektrisch, gekoppelt sein und/oder dazu ausgebildet sein, die erste Signalverarbeitungseinheit in Messgrößenzeitintervallen in die Messeinstellung und in mit den Messgrößenzeitintervallen abwechselnden Betriebsgrößenzeitintervallen in die mindestens eine Betriebseinstellung einzustellen.

In einer Weiterbildung der Erfindung weisen/weist die erste Signalverarbeitungseinheit und/oder die zweite Signalverarbeitungseinheit jeweils einen Komparator und/oder eine monostabile Kippstufe auf. Insbesondere können/kann das erste Messgrößensignal und/oder das zweite Messgrößensignal und/oder das mindestens eine Betriebsgrößensignal, insbesondere jeweils, ein gepulstes Messsignal sein bzw. Messpulse aufweisen. Zusätzlich oder alternativ kann der Komparator der, insbesondere zugehörigen, monostabilen Kippstufe vorgeschaltet sein.

In einer Ausgestaltung der Erfindung ist ein Schwellwert des Komparators der zweiten Signalverarbeitungseinheit zur Messeinstellung auf einen Messschwellwert und zur mindestens einen Betriebseinstellung auf mindestens einen von dem Messschwellwert verschiedenen Betriebsschwellwert einstellbar. Insbesondere kann die Einstelleinheit dazu ausgebildet sein, den Schwellwert des Komparators der zweiten Signalverarbeitungseinheit in den Messgrößenzeitintervallen auf den Messschwellwert und in den Betriebsgrößenzeitintervallen auf den mindestens einen Betriebsschwellwert einzustellen. Zusätzlich oder alternativ kann ein Schwellwert des Komparators der ersten Signalverarbeitungseinheit dem Messschwellwert entsprechen, insbesondere gleichen. Zusätzlich oder alternativ kann ein Schwellwert des Komparators der ersten Signalverarbeitungseinheit fest bzw. fix sein und/oder der Schwellwert des Komparators der ersten Signalverarbeitungseinheit braucht oder kann nicht einstellbar sein. Alternativ kann ein Schwellwert des Komparators der ersten Signalverarbeitungseinheit zur Messeinstellung auf einen Messschwellwert und zur mindestens einen Betriebseinstellung auf mindestens einen von dem Messschwellwert verschiedenen Betriebsschwellwert einstellbar sein. Insbesondere kann die Einstelleinheit dazu ausgebildet sein, den Schwellwert des Komparators der ersten Signalverarbeitungseinheit in den Messgrößenzeitintervallen auf den Messschwellwert und in den Betriebsgrößenzeitintervallen auf den mindestens einen Betriebsschwellwert einzustellen.

Insbesondere kann für die Hochtemperatur-Messinformation ein Hochtemperatur-Betriebsschwellwert gegenüber dem Messschwellwert für die Messinformation erhöht sein. Zusätzlich oder alternativ kann für die Regelinformation ein Regel-Betriebsschwellwert gegenüber dem Messschwellwert für die Messinformation, insbesondere nochmals, erhöht sein. Weiter zusätzlich oder alternativ kann für die Höhenstrahlinformation ein Höhenstrahl-Betriebsschwellwert gegenüber dem Messschwellwert für die Messinformation, insbesondere nochmals, erhöht sein. Weiter zusätzlich oder alternativ kann für die Rauschkantenpositionsinformation ein Rauschkantenpositions-Betriebsschwellwert gegenüber dem Messschwellwert für die Messinformation erniedrigt sein.

In einer Ausgestaltung der Erfindung ist die Bewertungseinheit dazu ausgebildet bzw. konfiguriert, insbesondere zeitlich kontinuierlich bzw. fortlaufend bzw. pausenfrei, die Rauschkantenpositionsinformation, insbesondere soweit vorhanden, auf Erreichung und/oder Überschreitung eines Rauschkantenpositionsschwellwerts zu überwachen, insbesondere automatisch. Die Einstelleinheit ist dazu ausgebildet bzw. konfiguriert, in dem Fall der Erreichung und/oder der Überschreitung des Rauschkantenpositionsschwellwerts ein Verhältnis einer, insbesondere jeweiligen, Zeitdauer der Betriebsgrößenzeitintervalle, insbesondere eines Betriebsgrößenzeitintervalls, zur Verarbeitung von dem Betriebsgrößensignal aufweisend die Hochtemperatur-Messinformation zu einer Zeitdauer der Messgrößenzeitintervalle, insbesondere eines Messgrößenzeitintervalls, gegenüber dem Fall der Unterschreitung zu verlängern, insbesondere automatisch. Dies ermöglicht einen Weiterbetrieb, insbesondere des radiometrischen Messgeräts, und es braucht zu keinem Messabbruch, insbesondere des radiometrischen Messgeräts, aufgrund einer zu hohen Rauschkannte und daraus resultierender Fehler zu kommen. Insbesondere kann in dem Fall der Erreichung und/oder der Überschreitung die Messinformation fehlerhaft sein und somit kann oder braucht die, insbesondere relativ, verkürzte Zeitdauer der Messgrößenzeitintervalle, insbesondere des Messgrößenzeitintervalls, keinen weiteren Nachteil darstellen. Zusätzlich oder alternativ kann die, insbesondere relativ, verlängerte Zeitdauer der Hochtemperatur-Betriebsgrößenzeitintervalle, insbesondere des Hochtemperatur-Betriebsgrößenzeitintervalls, ermöglichen, eine geringere Empfindlichkeit der, insbesondere zweiten, Signalverarbeitungseinheit in der Hochtemperatur-Betriebseinstellung gegenüber der Messeinstellung, mindestens teilweise, zu kompensieren. Weiter zusätzlich kann in dem Fall der Unterschreitung das erste Messgrößensignal und/oder das zweite Messgrößensignal aufweisend die Messinformation und in dem Fall der Erreichung und/oder der Überschreitung das Betriebsgrößensignal aufweisend die Hochtemperatur-Messinformation für die Messgröße verwendet werden, insbesondere durch das radiometrische Messgerät. Weiter zusätzlich oder alternativ kann die Einstelleinheit mit der Bewertungseinheit, insbesondere elektrisch, gekoppelt sein.

In einer Weiterbildung der Erfindung haben die Messgrößenzeitintervalle, insbesondere jeweils, eine von den Betriebsgrößenzeitintervallen, insbesondere jeweils, verschiedene, insbesondere kürzere, Zeitdauer. Zusätzlich oder alternativ haben die Messgrößenzeitintervalle, insbesondere jeweils, eine Zeitdauer von 10 Millisekunden (ms), insbesondere von 100 ms, bis 300 Sekunden (s), insbesondere bis 10 s. Zusätzlich oder alternativ haben die Betriebsgrößenzeitintervalle, insbesondere jeweils, eine Zeitdauer von 50 ms, insbesondere von 500 ms, bis 900 s, insbesondere bis 100 s.

In einer Weiterbildung der Erfindung weist die optoelektronische Sensoreinrichtung mindestens eine Photodiode, insbesondere mindestens eine Halbleiter-Photodiode, insbesondere mindestens eine Avalanche-Photodiode, insbesondere mindestens ein Array von Photodioden, insbesondere mindestens einen Silizium-Photomultiplier, auf. Dies kann einen relativ niedrigen Energieverbrauch des radiometrischen Messgeräts ermöglichen. Alternativ kann die optoelektronische Sensoreinrichtung mindestens ein Vacuum Photomultiplier Tube bzw. mindestens eine Elektronenröhre aufweisen.

In einer Weiterbildung der Erfindung weist das radiometrische Messgerät eine, insbesondere elektrische, Schnittstelle auf. Die Schnittstelle ist dazu ausgebildet bzw. konfiguriert, das radiometrische Messgerät mit einem, insbesondere elektrischen und/oder externen, Empfänger zur, insbesondere elektrischen, Datenübertragung, insbesondere zum Datenaustausch, insbesondere elektrisch, zu koppeln. Das radiometrische Messgerät ist dazu ausgebildet bzw. konfiguriert, ausschließlich bzw. nur über seine Schnittstelle mit elektrischer Energie, insbesondere Betriebsenergie, versorgt zu werden, insbesondere von dem Empfänger. Insbesondere kann dies durch den relativ niedrigen Energieverbrauch des radiometrischen Messgeräts, wie zuvor beschrieben, ermöglicht werden. Dies ermöglicht, dass das radiometrische Gerät flexibel eingesetzt werden kann. Zusätzlich oder alternativ ermöglicht dies die Übertragung von dem ersten Messgrößensignal und/oder dem zweiten Messgrößensignal, insbesondere der Messinformation, und/oder von einem auf dem ersten Messgrößensignal und/oder dem zweiten Messgrößensignal, insbesondere jeweils, basierenden Signal und/oder von dem Betriebsgrößensignal, insbesondere der Hochtemperatur-Messinformation, und/oder von einem auf dem Betriebsgrößensignal aufweisend die Hochtemperatur-Messinformation basierenden Signal, soweit die Hochtemperatur-Messinformation vorhanden ist, und/oder von der Messgröße, insbesondere einem Wert des Messgröße. Insbesondere kann die Schnittstelle eine analoge Stromschnittstelle sein, insbesondere eine sogenannte vier bis zwanzig Milliampere Stromschleife, eine digitale Stromschnittstelle, eine gemischt analoge/digitale Schnittstelle, eine Feldbusschnittstelle oder eine Zweileiter-Schnittstelle sein. Zusätzlich oder alternativ kann die Schnittstelle eine Modbus-Schnittstelle, eine Profibus-Schnittstelle, eine Hart-Schnittstelle, eine FOUNDATION Fieldbus-Schnittstelle oder einer Ethernet-Schnittstelle sein. Weiter zusätzlich oder alternativ kann oder braucht nicht das radiometrische Messgerät eine weitere Energieversorgung, z.B. in Form von einem dezidierten Netzteil, aufweisen.

In einer Weiterbildung der Erfindung weist das radiometrische Messgerät eine, insbesondere elektrische, Fehlfunktions-Ausgabe- und/oder Übertragungseinheit auf. Die Fehlfunktions-Ausgabe- und/oder Übertragungseinheit ist dazu ausgebildet bzw. konfiguriert, bei Bewertung der ersten Signalverarbeitungseinheit und/oder der zweiten Signalverarbeitungseinheit als fehlerhaft verarbeitend ein, insbesondere elektrisches, Fehlfunktions-Signal auszugeben und/oder zu übertragen, insbesondere mittels der Schnittstelle, insbesondere soweit vorhanden, insbesondere automatisch. Dies ermöglicht, dass ein Benutzer des radiometrischen Messgeräts von der Bewertung als fehlerhaft verarbeitend Kenntnis erlangen kann. Zusätzlich kann die Fehlfunktions-Ausgabe- und/oder Übertragungseinheit dazu ausgebildet sein, in dem Fall der Erreichung und/oder der Überschreitung des Rauschkantenpositionsschwellwerts durch die Rauschkantenpositionsinformation ein, insbesondere elektrisches, Rausch- bzw. Hochtemperatur-Signal auszugeben und/oder zu übertragen, insbesondere mittels der Schnittstelle, insbesondere soweit vorhanden. Weiter zusätzlich oder alternativ kann die Fehlfunktions-Ausgabe- und/oder Übertragungseinheit mit der Bewertungseinheit, insbesondere elektrisch, gekoppelt sein.

In einer Weiterbildung der Erfindung weisen das erste Messgrößensignal und das zweite Messgrößensignal, insbesondere jeweils, insbesondere die Messinformation, insbesondere soweit vorhanden, einen Messgrößenwert der Messgröße auf. Zusätzlich oder alternativ ist das radiometrische Messgerät, insbesondere eine, insbesondere elektrische, Bestimmungseinheit des radiometrischen Messgeräts, dazu ausgebildet bzw. konfiguriert, basierend auf dem ersten Messgrößensignal und/oder dem zweiten Messgrößensignal, insbesondere jeweils, insbesondere der Messinformation, insbesondere soweit vorhanden, einen Messgrößenwert der Messgröße zu bestimmen, insbesondere automatisch. Zusätzlich kann das Betriebsgrößensignal aufweisend die Hochtemperatur-Messinformation, insbesondere soweit vorhanden, einen Messgrößenwert der Messgröße aufweisen. Weiter zusätzlich oder alternativ kann das radiometrische Messgerät, insbesondere eine, insbesondere elektrische, Bestimmungseinheit des radiometrischen Messgeräts, dazu ausgebildet sein, basierend auf dem Betriebsgrößensignal aufweisend die Hochtemperatur-Messinformation, insbesondere soweit vorhanden, einen Messgrößenwert der Messgröße zu bestimmen. Weiter zusätzlich oder alternativ kann die Bestimmungseinheit, insbesondere soweit vorhanden, eine CPU bzw. einen Mikrokontroller bzw. einen Signalprozessor aufweisen, insbesondere sein. Weiter zusätzlich oder alternativ kann das radiometrische Messgerät einen, insbesondere nicht-flüchtigen, Datenspeicher zum Hinterlegen eines Messgrößenbestimmungsfaktors aufweisen.

In einer Ausgestaltung der Erfindung weist das radiometrische Messgerät mindestens einen, insbesondere elektrischen, Zähler und/oder mindestens einen, insbesondere elektrischen, Analog-Digital-Umsetzer zur, insbesondere automatischen, Bestimmung des Messgrößenwerts basierend auf dem ersten Messgrößensignal und/oder dem zweiten Messgrößensignal, insbesondere jeweils, insbesondere der Messinformation, insbesondere soweit vorhanden, auf. Insbesondere können/kann das erste Messgrößensignal und/oder das zweite Messgrößensignal und/oder das mindestens eine Betriebsgrößensignal, insbesondere jeweils, ein gepulstes Messsignal sein bzw. Messpulse aufweisen. Zusätzlich können/kann der mindestens eine Zähler und/oder der mindestens eine Analog-Digital-Umsetzer zur Bestimmung des Messgrößenwerts basierend auf dem Betriebsgrößensignal aufweisend die Hochtemperatur-Messinformation, insbesondere soweit vorhanden, ausgebildet sein.

In einer Weiterbildung der Erfindung weist das radiometrische Messgerät ein gemeinsames Gehäuse auf. In dem gemeinsamen Gehäuse sind die Szintillatoreinrichtung, die optoelektronische Sensoreinrichtung, die erste Signalverarbeitungseinheit, die zweite Signalverarbeitungseinheit, die Einstelleinheit und die Bewertungseinheit angeordnet. Zusätzlich können/kann in dem gemeinsamen Gehäuse die Schnittstelle, die Fehlfunktions-Ausgabe- und/oder Übertragungseinheit, die Bestimmungseinheit, der mindestens eine Zähler und/oder der mindestens eine Analog-Digital-Umsetzer, insbesondere soweit vorhanden, angeordnet sein. Weiter zusätzlich oder alternativ kann das gemeinsame Gehäuse als ein Explosionsschutzgehäuse ausgebildet sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein erfindungsgemäßes radiometrisches Messgerät,
- Fig. 2: einer erste Signalverarbeitungseinheit des radiometrischen Messgeräts der Fig. 1,
- Fig. 3: einer einstellbare zweite Signalverarbeitungseinheit des radiometrischen Messgeräts der Fig. 1,
- Fig. 4: ein Spektrum einer Häufigkeit von Messpulsen über einer Intensität der Messpulse,
- Fig. 5: eine zeitliche Sequenz von Zeitintervallen, insbesondere in einem Fall einer Unterschreitung eines Rauschkantenpositionsschwellwerts durch eine Rauschkantenpositionsinformation, und
- Fig. 6: eine weitere zeitliche Sequenz von Zeitintervallen, insbesondere in einem Fall einer Erreichung und/oder einer Überschreitung des Rauschkantenpositionsschwellwerts durch die Rauschkantenpositionsinformation.

### DETAILLIERTE BESCHREIBUNG DER AUSFÜHRUNGSBEISPIELE

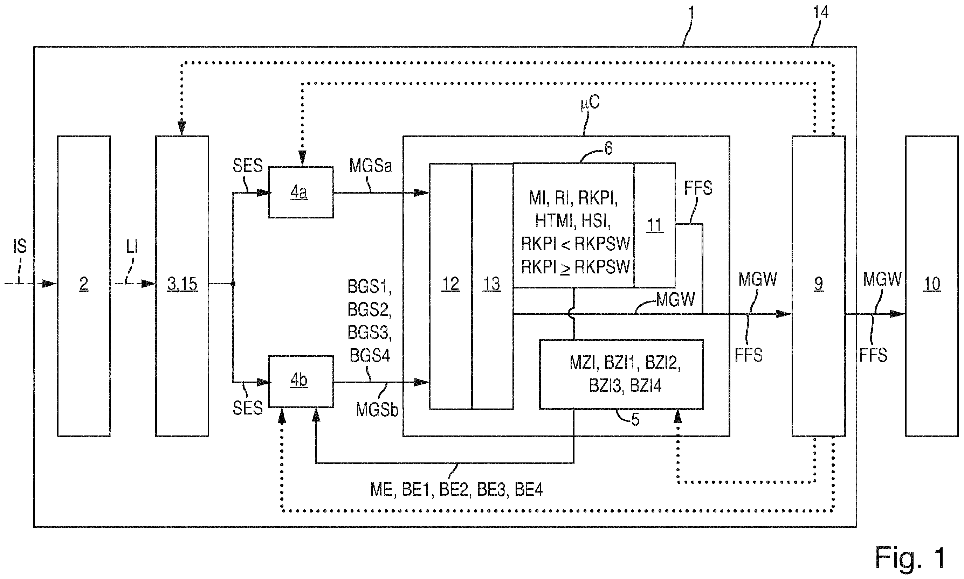

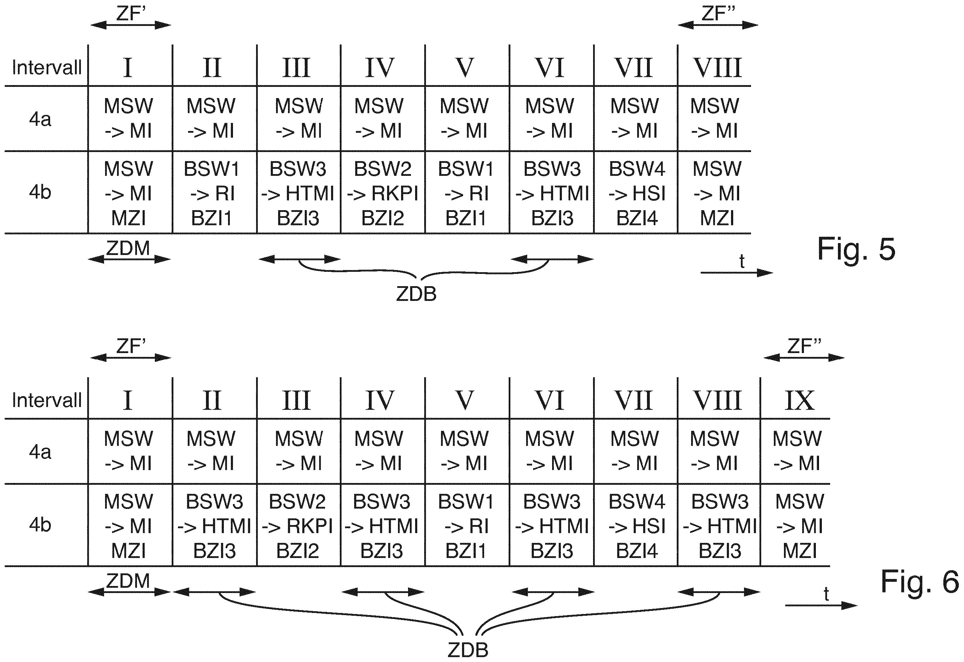

Fig. 1 zeigt ein erfindungsgemäßes radiometrische Messgerät 1 zum Erfassen einer Messgröße MG in Form eines Füllstands, eines Grenzstands, einer Dichte und/oder eines Massenstroms. Das radiometrische Messgerät 1 weist eine Szintillatoreinrichtung 2, eine optoelektronische Sensoreinrichtung 3, eine erste Signalverarbeitungseinheit 4a, eine einstellbare zweite Signalverarbeitungseinheit 4b, eine Einstelleinheit 5 und eine Bewertungseinheit 6 auf. Die Szintillatoreinrichtung 2 ist dazu ausgebildet, bei Anregung durch ionisierende Strahlung IS Lichtimpulse LI zu erzeugen. Die optoelektronische Sensoreinrichtung 3 ist dazu ausgebildet, die Lichtimpulse LI in ein, insbesondere elektrisches, Sensorsignal SES umzuwandeln. Die erste Signalverarbeitungseinheit 4a ist dazu ausgebildet, das Sensorsignal SES in ein erstes, insbesondere elektrisches, Messgrößensignal MGSa zu verarbeiten. Die zweite Signalverarbeitungseinheit 4b ist dazu ausgebildet, das Sensorsignal SES in einer Messeinstellung ME in ein zweites, insbesondere elektrisches, Messgrößensignal MGSb zu verarbeiten. Das zweite Messgrößensignal MGSb entspricht, insbesondere gleicht, dem ersten Messgrößensignal MGSa bei fehlerfrei verarbeitender erster Signalverarbeitungseinheit 4a und fehlerfrei verarbeitender zweiter Signalverarbeitungseinheit 4b. Des Weiteren ist die zweite Signalverarbeitungseinheit 4b dazu, das Sensorsignal SES in mindestens einer Betriebseinstellung BE1, BE2, BE3, BE4 in mindestens ein Betriebsgrößensignal BGS1, BGS2, BGS3, BGS4 zu verarbeiten. Das mindestens eine Betriebsgrößensignal BGS1, BGS2, BGS3, BGS4 entspricht den Messgrößensignalen MGSa, MGSb nicht. Die Einstelleinheit 5 ist dazu ausgebildet, die zweite Signalverarbeitungseinheit 4b in Messgrößenzeitintervallen MZI in die Messeinstellung ME und in mit den Messgrößenzeitintervallen MZI abwechselnden Betriebsgrößenzeitintervallen BZI1, BZ2, BZI3, BZI4 in die mindestens eine Betriebseinstellung BE1, BE2, BE3, BE4 einzustellen, wie in Fig. 5 und 6 gezeigt. Die Bewertungseinheit 6 ist dazu ausgebildet, das erste Messgrößensignal MGSa und das zweite Messgrößensignal MGSb miteinander zu vergleichen und in Abhängigkeit von einem Ergebnis des Vergleichs die erste Signalverarbeitungseinheit 4a und/oder die zweite Signalverarbeitungseinheit 4b als fehlerfrei oder fehlerhaft verarbeitend zu bewerten.

Im gezeigten Ausführungsbeispiel weist das radiometrische Messgerät 1 einen Mikrokontroller µC auf. Der Mikrokontroller µC weist die Einstelleinheit 5 und die Bewertungseinheit 6 auf.

Des Weiteren ist die optoelektronische Sensoreinrichtung 3 mit der Szintillatoreinrichtung 2 optisch gekoppelt, wie in Fig. 1 durch eine gestrichelte Linie angezeigt. Außerdem ist die erste Signalverarbeitungseinheit 4a mit der optoelektronischen Sensoreinrichtung 3 elektrisch gekoppelt, wie in Fig. 1 durch eine durchgezogene Linie angezeigt. Weiter ist die zweite Signalverarbeitungseinheit 4b mit der optoelektronischen Sensoreinrichtung 3 elektrisch gekoppelt, wie in Fig. 1 durch eine durchgezogene Linie angezeigt. Zudem ist die Einstelleinheit 5 mit der zweiten Signalverarbeitungseinheit 4b elektrisch gekoppelt, wie in Fig. 1 durch eine durchgezogene Linie angezeigt. Des Weiteren ist die Bewertungseinheit 6 mit der ersten Signalverarbeitungseinheit 4a und der zweiten Signalverarbeitungseinheit 4b elektrisch gekoppelt, wie in Fig. 1 durch eine durchgezogene Linie angezeigt.

Im Detail ist die Einstelleinheit 5 dazu ausgebildet, die zweite Signalverarbeitungseinheit 4b, insbesondere periodisch, wiederholend in die Messeinstellung ME und in die mindestens eine Betriebseinstellung BE1, BE2, BE3, BE4 einzustellen.

Außerdem ist die erste Signalverarbeitungseinheit 4a dazu ausgebildet, das Sensorsignal SES aus einem Zeitfenster ZF', ZF", wie in Fig. 5 für ein Zeitintervall I und ein Zeitintervall VIII gezeigt und in Fig. 6 für ein Zeitintervall I und ein Zeitintervall IX gezeigt, in das erste Messgrößensignal MGSa zu verarbeiten. Die zweite Signalverarbeitungseinheit 4b ist dazu ausgebildet, dasselbe Sensorsignal SES aus demselben Zeitfenster ZF', ZF" in der Messeinstellung ME in das zweite Messgrößensignal MGSb zu verarbeiten. Die Einstelleinheit 5 ist dazu ausgebildet, die zweite Signalverarbeitungseinheit 4b zeitweise in die Messeinstellung ME derart einzustellen, dass die zweite Signalverarbeitungseinheit 4b dasselbe Sensorsignal SES aus demselben Zeitfenster ZF', ZF" in das zweite Messgrößensignal MGSb verarbeitet. Die Bewertungseinheit 6 ist dazu ausgebildet, das erste Messgrößensignale MGSa und das zweite Messgrößensignale MGSb verarbeitet aus demselben Sensorsignal SES aus demselben Zeitfenster ZW', ZF" miteinander zu vergleichen.

In Fig. 1 vergleicht die Bewertungseinheit 6 das erste Messgrößensignal MGSa und das zweite Messgrößensignal MGSb verarbeitet aus demselben Sensorsignal SES aus demselben Zeitfenster ZF', ZF" miteinander und bewertet in Abhängigkeit von einem Ergebnis des Vergleichs die erste Signalverarbeitungseinheit 4a und/oder die zweite Signalverarbeitungseinheit 4b als fehlerfrei oder fehlerhaft verarbeitend.

Im Detail ist die erste Signalverarbeitungseinheit 4a dazu ausgebildet, das Sensorsignal SES ausschließlich in das erste Messgrößensignal MGSa zu verarbeiten, wie in Fig. 5 und 6 gezeigt.

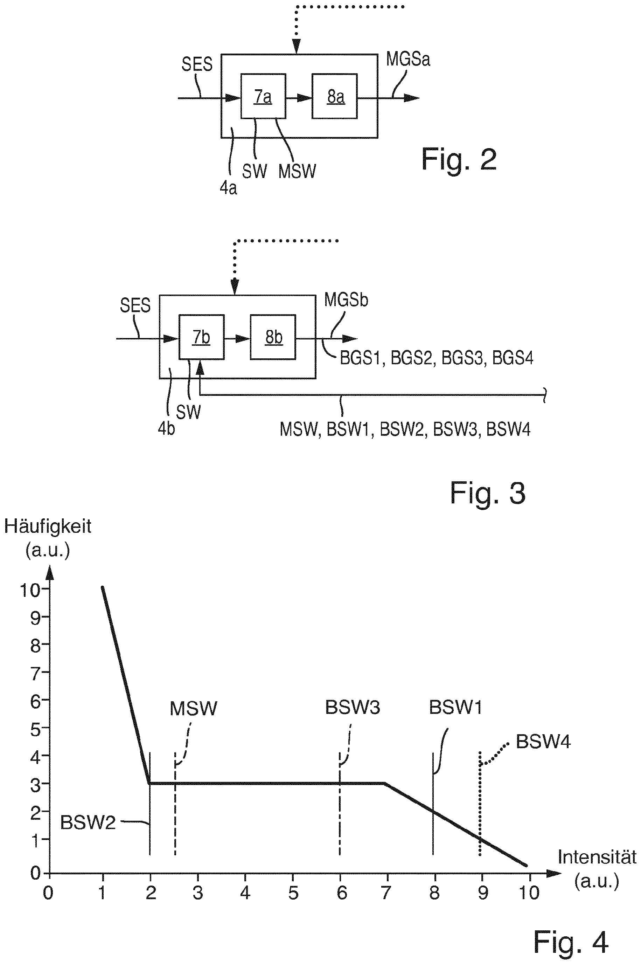

Weiter weisen die erste Signalverarbeitungseinheit 4a und die zweite Signalverarbeitungseinheit 4b jeweils einen Komparator 7a, 7b und eine monostabile Kippstufe 8a, 8b auf, wie in Fig. 2 und 3 gezeigt.

Insbesondere weisen das erste Messgrößensignal MGSa und das zweite Messgrößensignal MGSb und das mindestens eine Betriebsgrößensignal BGS1, BGS2, BGS3, BGS4, insbesondere jeweils, Messpulse auf.

Im Detail ist ein Schwellwert SW des Komparators 7b der zweiten Signalverarbeitungseinheit 4b zur Messeinstellung ME auf einen Messschwellwert MSW und zur mindestens einen Betriebseinstellung BE1, BE2, BE3, BE4 auf mindestens einen von dem Messschwellwert MSW verschiedenen Betriebsschwellwert BSW1, BSW2, BSW3, BSW4 einstellbar, wie in Fig. 3 gezeigt.

Zusätzlich ist ein Schwellwert SW des Komparators 7a der ersten Signalverarbeitungseinheit 4a fest, und insbesondere entspricht, insbesondere gleicht, dem Messschwellwert MSW, wie in Fig. 2 gezeigt.

Zudem weisen das erste Messgrößensignal MGSa und das zweite Messgrößensignal MGSb jeweils eine Messinformation MI auf, wie in Fig. 5 und 6 gezeigt.

Zusätzlich weist im gezeigten Ausführungsbeispiel das mindestens eine Betriebsgrößensignal BGS1, BGS2, BGS3, BGS4 eine Regelinformation RI, eine Rauschkantenpositionsinformation RKPI, eine Hochtemperatur-Messinformation HTMI und eine Höhenstrahlinformation HSI auf.

Im Detail ist für die Hochtemperatur-Messinformation HTMI ein Hochtemperatur-Betriebsschwellwert BSW3 gegenüber dem Messschwellwert MSW für die Messinformation MI erhöht, wie in dem Spektrum einer Häufigkeit von Messpulsen über einer Intensität der Messpulse der Fig. 4 gezeigt. Zusätzlich ist für die Regelinformation RI ein Regel-Betriebsschwellwert BSW1 gegenüber dem Messschwellwert MSW für die Messinformation MI, insbesondere nochmals, erhöht. Weiter zusätzlich ist für die Höhenstrahlinformation HSI ein Höhenstrahl-Betriebsschwellwert BSW4 gegenüber dem Messschwellwert MSW für die Messinformation MI, insbesondere nochmals, erhöht. Weiter zusätzlich ist für die Rauschkantenpositionsinformation RKPI ein Rauschkantenpositions-Betriebsschwellwert BSW2 gegenüber dem Messschwellwert MSW für die Messinformation MI erniedrigt.

In alternativen Ausführungsbeispielen kann das mindestens eine Betriebsgrößensignal die Regelinformation, die Rauschkantenpositionsinformation, die Hochtemperatur-Messinformation und/oder die Höhenstrahlinformation aufweisen.

In anderen Worten: im gezeigten Ausführungsbeispiel ist die zweite Signalverarbeitungseinheit 4b dazu ausgebildet, das Sensorsignal SES in vier Betriebseinstellungen BE1, BE2, BE3, BE4 in vier Betriebsgrößensignale BGS1, BGS2, BGS3, BGS4 zu verarbeiten. Die Einstelleinheit 5 ist dazu ausgebildet, die zweite Signalverarbeitungseinheit 4b in Betriebsgrößenzeitintervallen BZI1, BZI2, BZI3, BZI4 in die vier Betriebseinstellungen BE1, BE2, BE3, BE4 einzustellen. Im Detail ist der Schwellwert SW des Komparators 7b der zweiten Signalverarbeitungseinheit 4b zu den vier Betriebseinstellungen BE1, BE2, BE3, BE4 auf die vier Betriebsschwellwerte BSW1, BSW2, BSW3, BSW4 einstellbar.

In alternativen Ausführungsbeispielen kann die zweite Signalverarbeitungseinheit dazu ausgebildet sein, das Sensorsignal in nur einer einzigen Betriebseinstellung oder in zwei, drei oder mindestens fünf Betriebseinstellungen in nur ein einziges Betriebsgrößensignal oder in zwei, drei oder mindestens fünf Betriebsgrößensignale zu verarbeiten. Die Einstelleinheit kann dazu ausgebildet sein, die zweite Signalverarbeitungseinheit in Betriebsgrößenzeitintervallen in die eine Betriebseinstellung oder in die zwei, drei oder mindestens fünf Betriebseinstellungen einzustellen. Im Detail kann der Schwellwert des Komparators der zweiten Signalverarbeitungseinheit zu der einen Betriebseinstellung oder zu den zwei, drei oder mindestens fünf Betriebseinstellungen auf nur einen einzigen Betriebsschwellwert oder auf zwei, drei oder mindestens fünf Betriebsschwellwerte einstellbar sein.

In einem in Fig. 5 gezeigten Zeitintervall I, insbesondere einem Messgrößenzeitintervall MZI, stellt die Einstelleinheit 5 die zweite Signalverarbeitungseinheit 4b in die Messeinstellung ME, insbesondere den Schwellwert SW des Komparators 7b der zweiten Signalverarbeitungseinheit 4b auf den Messschwellwert MSW. Somit verarbeitet die zweite Signalverarbeitungseinheit 4b in dem Zeitintervall I das Sensorsignal SES in das zweite Messgrößensignal MGSb aufweisend die Messinformation MI.

In einem nachfolgenden Zeitintervall II, insbesondere einem Regel-Betriebsgrößenzeitintervall BZI1, stellt die Einstelleinheit 5 die zweite Signalverarbeitungseinheit 4b in die Regel-Betriebseinstellung BE1, insbesondere den Schwellwert SW auf den Regel-Betriebsschwellwert BSW1. Somit verarbeitet die zweite Signalverarbeitungseinheit 4b in dem Zeitintervall II das Sensorsignal SES in das Regel-Betriebsgrößensignal BGS1 aufweisend die Regelinformation RI.

In einem nachfolgenden Zeitintervall III, insbesondere einem Hochtemperatur-Betriebsgrößenzeitintervall BZI3, stellt die Einstelleinheit 5 die zweite Signalverarbeitungseinheit 4b in die Hochtemperatur-Betriebseinstellung BE3, insbesondere den Schwellwert SW auf den Hochtemperatur-Betriebsschwellwert BSW3. Somit verarbeitet die zweite Signalverarbeitungseinheit 4b in dem Zeitintervall III das Sensorsignal SES in das Hochtemperatur-Betriebsgrößensignal BGS3 aufweisend die Hochtemperatur-Messinformation HTMI.

In einem nachfolgenden Zeitintervall IV, insbesondere einem Rauschkantenpositions-Betriebsgrößenzeitintervall BZI2, stellt die Einstelleinheit 5 die zweite Signalverarbeitungseinheit 4b in die Rauschkantenpositions-Betriebseinstellung BE2, insbesondere den Schwellwert SW auf den Rauschkantenpositions-Betriebsschwellwert BSW2. Somit verarbeitet die zweite Signalverarbeitungseinheit 4b in dem Zeitintervall IV das Sensorsignal SES in das Rauschkantenpositions-Betriebsgrößensignal BGS3 aufweisend die Rauschkantenpositionsinformation RKPI.

In einem nachfolgenden Zeitintervall V, insbesondere einem Regel-Betriebsgrößenzeitintervall BZI1, stellt die Einstelleinheit 5 die zweite Signalverarbeitungseinheit 4b in die Regel-Betriebseinstellung BE1, insbesondere wieder. Somit verarbeitet die zweite Signalverarbeitungseinheit 4b in dem Zeitintervall V das Sensorsignal SES in das Regel-Betriebsgrößensignal BGS1 aufweisend die Regelinformation RI, insbesondere wieder.

In einem nachfolgenden Zeitintervall VI, insbesondere einem Hochtemperatur-Betriebsgrößenzeitintervall BZI3, stellt die Einstelleinheit 5 die zweite Signalverarbeitungseinheit 4b in die Hochtemperatur-Betriebseinstellung BE3, insbesondere wieder. Somit verarbeitet die zweite Signalverarbeitungseinheit 4b in dem Zeitintervall VI das Sensorsignal SES in das Hochtemperatur-Betriebsgrößensignal BGS3 aufweisend die Hochtemperatur-Messinformation HTMI, insbesondere wieder.

In einem nachfolgenden Zeitintervall VII, insbesondere einem Höhenstrahl-Betriebsgrößenzeitintervall BZI4, stellt die Einstelleinheit 5 die zweite Signalverarbeitungseinheit 4b in die Höhenstrahl-Betriebseinstellung BE4, insbesondere den Schwellwert SW auf den Höhenstrahl-Betriebsschwellwert BSW4. Somit verarbeitet die zweite Signalverarbeitungseinheit 4b in dem Zeitintervall VII das Sensorsignal SES in das Höhenstrahl-Betriebsgrößensignal BGS4 aufweisend die Höhenstrahlinformation HSI.

In einem nachfolgenden Zeitintervall VIII, insbesondere einem Messgrößenzeitintervall MZI, stellt die Einstelleinheit 5 die zweite Signalverarbeitungseinheit 4b in die Messeinstellung ME, insbesondere wieder. Somit verarbeitet die zweite Signalverarbeitungseinheit 4b in dem Zeitintervall VIII das Sensorsignal SES in das zweite Messgrößensignal MGSb aufweisend die Messinformation MI, insbesondere wieder.

In den Zeitintervallen I bis VIII verarbeitet die erste Signalverarbeitungseinheit 4a das Sensorsignal SES in das erste Messgrößensignal MGSa.

Des Weiteren ist die Bewertungseinheit 6 dazu ausgebildet, die Rauschkantenpositionsinformation RKPI auf Erreichung und/oder Überschreitung eines Rauschkantenpositionsschwellwerts RKPSW zu überwachen. Die Einstelleinheit 5 ist dazu ausgebildet, in dem Fall der Erreichung und/oder der Überschreitung des Rauschkantenpositionsschwellwerts RKPSW ein Verhältnis einer Zeitdauer ZDB der Betriebsgrößenzeitintervalle BZI3 zur Verarbeitung von dem Betriebsgrößensignal BGS3 aufweisend die Hochtemperatur-Messinformation HTMI zu einer Zeitdauer ZDM der Messgrößenzeitintervalle MZI gegenüber dem Fall der Unterschreitung zu verlängern, insbesondere zu verdoppeln, wie in Fig. 5 und 6 gezeigt.

Im Detail ist in Fig. 5 der Fall der Unterschreitung gezeigt und in Fig. 6 ist der Fall der Erreichung und/oder der Überschreitung gezeigt.

In einem in Fig. 6 gezeigten Zeitintervall I, insbesondere einem Messgrößenzeitintervall MZI, stellt die Einstelleinheit 5 die zweite Signalverarbeitungseinheit 4b in die Messeinstellung ME. Somit verarbeitet die zweite Signalverarbeitungseinheit 4b in dem Zeitintervall I das Sensorsignal SES in das zweite Messgrößensignal MGSb aufweisend die Messinformation MI.

In einem nachfolgenden Zeitintervall II, insbesondere einem, insbesondere zeitlich verlängerten, Hochtemperatur-Betriebsgrößenzeitintervall BZI3, stellt die Einstelleinheit 5 die zweite Signalverarbeitungseinheit 4b in die Hochtemperatur-Betriebseinstellung BE3. Somit verarbeitet die zweite Signalverarbeitungseinheit 4b in dem Zeitintervall II das Sensorsignal SES in das Hochtemperatur-Betriebsgrößensignal BGS3 aufweisend die Hochtemperatur-Messinformation HTMI.

In einem nachfolgenden Zeitintervall III, insbesondere einem Rauschkantenpositions-Betriebsgrößenzeitintervall BZI2, stellt die Einstelleinheit 5 die zweite Signalverarbeitungseinheit 4b in die Rauschkantenpositions-Betriebseinstellung BE2. Somit verarbeitet die zweite Signalverarbeitungseinheit 4b in dem Zeitintervall III das Sensorsignal SES in das Rauschkantenpositions-Betriebsgrößensignal BGS3 aufweisend die Rauschkantenpositionsinformation RKPI.

In einem nachfolgenden Zeitintervall IV, insbesondere einem, insbesondere zeitlich verlängerten, Hochtemperatur-Betriebsgrößenzeitintervall BZI3, stellt die Einstelleinheit 5 die zweite Signalverarbeitungseinheit 4b in die Hochtemperatur-Betriebseinstellung BE3, insbesondere wieder. Somit verarbeitet die zweite Signalverarbeitungseinheit 4b in dem Zeitintervall IV das Sensorsignal SES in das Hochtemperatur-Betriebsgrößensignal BGS3 aufweisend die Hochtemperatur-Messinformation HTMI, insbesondere wieder.

In einem nachfolgenden Zeitintervall V, insbesondere einem Regel-Betriebsgrößenzeitintervall BZI1, stellt die Einstelleinheit 5 die zweite Signalverarbeitungseinheit 4b in die Regel-Betriebseinstellung BE1. Somit verarbeitet die zweite Signalverarbeitungseinheit 4b in dem Zeitintervall V das Sensorsignal SES in das Regel-Betriebsgrößensignal BGS1 aufweisend die Regelinformation RI.

In einem nachfolgenden Zeitintervall VI, insbesondere einem, insbesondere zeitlich verlängerten, Hochtemperatur-Betriebsgrößenzeitintervall BZI3, stellt die Einstelleinheit 5 die zweite Signalverarbeitungseinheit 4b in die Hochtemperatur-Betriebseinstellung BE3, insbesondere wieder. Somit verarbeitet die zweite Signalverarbeitungseinheit 4b in dem Zeitintervall VI das Sensorsignal SES in das Hochtemperatur-Betriebsgrößensignal BGS3 aufweisend die Hochtemperatur-Messinformation HTMI, insbesondere wieder.

In einem nachfolgenden Zeitintervall VII, insbesondere einem Höhenstrahl-Betriebsgrößenzeitintervall BZI4, stellt die Einstelleinheit 5 die zweite Signalverarbeitungseinheit 4b in die Höhenstrahl-Betriebseinstellung BE4. Somit verarbeitet die zweite Signalverarbeitungseinheit 4b in dem Zeitintervall VII das Sensorsignal SES in das Höhenstrahl-Betriebsgrößensignal BGS4 aufweisend die Höhenstrahlinformation HSI.

In einem nachfolgenden Zeitintervall VIII, insbesondere einem, insbesondere zeitlich verlängerten, Hochtemperatur-Betriebsgrößenzeitintervall BZI3, stellt die Einstelleinheit 5 die zweite Signalverarbeitungseinheit 4b in die Hochtemperatur-Betriebseinstellung BE3, insbesondere wieder. Somit verarbeitet die zweite Signalverarbeitungseinheit 4b in dem Zeitintervall VIII das Sensorsignal SES in das Hochtemperatur-Betriebsgrößensignal BGS3 aufweisend die Hochtemperatur-Messinformation HTMI, insbesondere wieder.

In einem nachfolgenden Zeitintervall IX, insbesondere einem Messgrößenzeitintervall MZI, stellt die Einstelleinheit 5 die zweite Signalverarbeitungseinheit 4b in die Messeinstellung ME, insbesondere wieder. Somit verarbeitet die zweite Signalverarbeitungseinheit 4b in dem Zeitintervall IX das Sensorsignal SES in das zweite Messgrößensignal MGSb aufweisend die Messinformation MI, insbesondere wieder.

In den Zeitintervallen I bis IX verarbeitet die erste Signalverarbeitungseinheit 4a das Sensorsignal SES in das erste Messgrößensignal MGSa.

Außerdem haben die Messgrößenzeitintervalle MZI eine von den Betriebsgrößenzeitintervallen BZI1, BZI2, BZI3, BZI4 verschiedene, insbesondere kürzere, Zeitdauer ZDM.

Im Detail haben die Messgrößenzeitintervalle MZI eine Zeitdauer ZDM von 10 ms bis 300 s.

Weiter haben die Betriebsgrößenzeitintervalle BZI1, BZI2, BZI3, BZI4 eine Zeitdauer ZDB von 50 ms bis 900 s.

Zudem weist im gezeigten Ausführungsbeispiel die optoelektronische Sensoreinrichtung 3 mindestens einen Silizium-Photomultiplier 15 auf, wie in Fig. 1 gezeigt. In alternativen Ausführungsbeispielen kann die optoelektronische Sensoreinrichtung mindestens eine Photodiode aufweisen.

Des Weiteren ist im gezeigten Ausführungsbeispiel das radiometrische Messgerät 1 dazu ausgebildet, basierend auf dem ersten Messgrößensignal MGSa und/oder dem zweiten Messgrößensignal MGSb, insbesondere der Messinformation MI, einen Messgrößenwert MGW der Messgröße MG zu bestimmen, insbesondere in dem Fall der Unterschreitung. In alternativen Ausführungsbeispielen können das erste Messgrößensignal und das zweite Messgrößensignal einen Messgrößenwert der Messgröße aufweisen.

Zusätzlich ist im gezeigten Ausführungsbeispiel das radiometrische Messgerät 1 dazu ausgebildet, basierend auf dem Betriebsgrößensignal BGS3 aufweisend die Hochtemperatur-Messinformation HTMI einen Messgrößenwert MGW der Messgröße MG zu bestimmen, insbesondere in dem Fall der Erreichung und/oder der Überschreitung.

Im Detail weist das radiometrische Messgerät 1 mindestens einen Zähler 12 und mindestens einen Analog-Digital-Umsetzer 13 zur Bestimmung des Messgrößenwerts MGW basierend auf dem ersten Messgrößensignal MGSa und/oder dem zweiten Messgrößensignal MGSb, insbesondere der Messinformation MI, auf, insbesondere in dem Fall der Unterschreitung.

Zusätzlich sind im gezeigten Ausführungsbeispiel der mindestens eine Zähler 12 und der mindestens eine Analog-Digital-Umsetzer 13 zur Bestimmung des Messgrößenwerts MGW basierend auf dem Betriebsgrößensignal BGS3 aufweisend die Hochtemperatur-Messinformation HTMI ausgebildet, insbesondere in dem Fall der Erreichung und/oder der Überschreitung.

Im gezeigten Ausführungsbeispiel weist der Mikrokontroller µC den mindestens einen Zähler 12 und den mindestens einen Analog-Digital-Umsetzer 13 auf.

In dem in Fig. 5 gezeigten Fall der Unterschreitung bestimmt das radiometrische Messgerät 1, insbesondere mittels des mindestens einen Zählers 12 und des mindestens einen Analog-Digital-Umsetzers 13, basierend auf dem ersten Messgrößensignal MGSa und/oder dem zweiten Messgrößensignal MGSb, insbesondere der Messinformation MI, den Messgrößenwert MGW. In dem in Fig. 6 gezeigten Fall der Erreichung und/oder der Überschreitung bestimmt das radiometrische Messgerät 1, insbesondere mittels des mindestens einen Zählers 12 und des mindestens einen Analog-Digital-Umsetzers 13, basierend auf dem Betriebsgrößensignal BGS3 aufweisend die Hochtemperatur-Messinformation HTMI den Messgrößenwert MGW.

Außerdem weist das radiometrische Messgerät 1 eine Schnittstelle 9 auf, wie in Fig. 1 gezeigt. Die Schnittstelle 9 ist dazu ausgebildet, das radiometrische Messgerät 1 mit einem Empfänger 10 zur Datenübertragung, insbesondere von dem Messgrößenwert MGW der Messgröße MG, zu koppeln. Das radiometrische Messgerät 1 ist dazu ausgebildet, ausschließlich über seine Schnittstelle 9 mit elektrischer Energie versorgt zu werden, insbesondere von dem Empfänger 10.

Im gezeigten Ausführungsbeispiel ist die Schnittstelle 9 mit dem Mikrokontroller µC elektrisch gekoppelt, wie in Fig. 1 durch eine durchgezogene Linie angezeigt.

In Fig. 1 ist das radiometrische Messgerät 1 mit dem Empfänger 10 über die Schnittstelle 9 elektrisch gekoppelt, wie in Fig. 1 durch eine durchgezogene Linie angezeigt. Weiter überträgt das radiometrische Messgerät 1, insbesondere mittels der Schnittstelle 9, den Messgrößenwert MGW, insbesondere an den Empfänger 10. Zudem wird das radiometrische Messgerät 1 ausschließlich über seine Schnittstelle 9 mit elektrischer Energie versorgt.

Des Weiteren weist das radiometrische Messgerät 1 eine Fehlfunktions-Ausgabe- und/oder Übertragungseinheit 11 auf, wie in Fig. 1 gezeigt. Die Fehlfunktions-Ausgabe- und/oder Übertragungseinheit 11 ist dazu ausgebildet, bei Bewertung der ersten Signalverarbeitungseinheit 4a und/oder der zweiten Signalverarbeitungseinheit 4b als fehlerhaft verarbeitend ein Fehlfunktions-Signal FFS auszugeben und/oder zu übertragen, insbesondere mittels der Schnittstelle 9, insbesondere an den Empfänger 10.

Zusätzlich ist im gezeigten Ausführungsbeispiel die Fehlfunktions-Ausgabe- und/oder Übertragungseinheit 11 dazu ausgebildet, in dem Fall der Erreichung und/oder der Überschreitung des Rauschkantenpositionsschwellwerts RKPSW durch die Rauschkantenpositionsinformation RKPI ein Rausch- bzw. Hochtemperatur-Signal auszugeben und/oder zu übertragen, insbesondere mittels der Schnittstelle 9, insbesondere an den Empfänger 10.

Im gezeigten Ausführungsbeispiel weist der Mikrokontroller µC die Fehlfunktions-Ausgabe- und/oder Übertragungseinheit 11 auf.

Außerdem weist das radiometrische Messgerät 1 ein gemeinsames Gehäuse 14, insbesondere in Form eines Explosionsschutzgehäuses, auf, wie in Fig. 1 gezeigt. In dem gemeinsamen Gehäuse 14 sind die Szintillatoreinrichtung 2, die optoelektronische Sensoreinrichtung 3, die erste Signalverarbeitungseinheit 4a, die zweite Signalverarbeitungseinheit 4b, die Einstelleinheit 5 und die Bewertungseinheit 6 bzw. der Mikrokontroller µC angeordnet.

Zusätzlich sind in dem gezeigten Ausführungsbeispiel in dem gemeinsamen Gehäuse 14 die Schnittstelle 9, die Fehlfunktions-Ausgabe- und/oder Übertragungseinheit 11, der mindestens eine Zähler 12 und der mindestens eine Analog-Digital-Umsetzer 13 angeordnet.

Wie die gezeigten und oben erläuterten Ausführungsbeispiele deutlich machen, stellt die Erfindung ein vorteilhaftes radiometrisches Messgerät zum Erfassen einer Messgröße in Form eines Füllstands, eines Grenzstands, einer Dichte und/oder eines Massenstroms bereit, das verbesserte Eigenschaften aufweist, insbesondere einen relativ großen Funktionsumfang hat und funktional sicher ist, insbesondere bei nur zwei Signalverarbeitungseinheiten, und einen relativ niedrigen Energieverbrauch hat.

## Patentansprüche

1. Radiometrisches Messgerät (1) zum Erfassen einer Messgröße (MG) in Form eines Füllstands, eines Grenzstands, einer Dichte und/oder eines Massenstroms, wobei das radiometrische Messgerät (1) aufweist:
- eine Szintillatoreinrichtung (2), wobei die Szintillatoreinrichtung (2) dazu ausgebildet ist, bei Anregung durch ionisierende Strahlung (IS) Lichtimpulse (LI) zu erzeugen,
- eine optoelektronische Sensoreinrichtung (3), wobei die optoelektronische Sensoreinrichtung (3) dazu ausgebildet ist, die Lichtimpulse (LI) in ein Sensorsignal (SES) umzuwandeln,
- eine erste Signalverarbeitungseinheit (4a), wobei die erste Signalverarbeitungseinheit (4a) dazu ausgebildet ist, das Sensorsignal (SES) in ein erstes Messgrößensignal (MGSa) zu verarbeiten,
- eine einstellbare zweite Signalverarbeitungseinheit (4b), wobei die zweite Signalverarbeitungseinheit (4b) dazu ausgebildet ist, das Sensorsignal (SES) in einer Messeinstellung (ME) in ein zweites Messgrößensignal (MGSb) zu verarbeiten, wobei das zweite Messgrößensignal (MGSb) dem ersten Messgrößensignal (MGSa) bei fehlerfrei verarbeitender erster Signalverarbeitungseinheit (4a) und fehlerfrei verarbeitender zweiter Signalverarbeitungseinheit (4b) entspricht, und das Sensorsignal (SES) in mindestens einer Betriebseinstellung (BE1, BE2, BE3, BE4) in mindestens ein Betriebsgrößensignal (BGS1, BGS2, BGS3, BGS4) zu verarbeiten, wobei das mindestens eine Betriebsgrößensignal (BGS1, BGS2, BGS3, BGS4) den Messgrößensignalen (MGSa, MGSb) nicht entspricht,
- eine Einstelleinheit (5), wobei die Einstelleinheit (5) dazu ausgebildet ist, die zweite Signalverarbeitungseinheit (4b) in Messgrößenzeitintervallen (MZI) in die Messeinstellung (ME) und in mit den Messgrößenzeitintervallen (MZI) abwechselnden Betriebsgrößenzeitintervallen (BZI1, BZI2, BZI3, BZI4) in die mindestens eine Betriebseinstellung (BE1, BE2, BE3, BE4) einzustellen, und
- eine Bewertungseinheit (6), wobei die Bewertungseinheit (6) dazu ausgebildet ist, das erste Messgrößensignal (MGSa) und das zweite Messgrößensignal (MGSb) miteinander zu vergleichen und in Abhängigkeit von einem Ergebnis des Vergleichs die erste Signalverarbeitungseinheit (4a) und/oder die zweite Signalverarbeitungseinheit (4b) als fehlerfrei oder fehlerhaft verarbeitend zu bewerten,
- wobei das erste Messgrößensignal (MGSa) und das zweite Messgrößensignal (MGSb) jeweils eine Messinformation (MI) aufweisen, und
- wobei das mindestens eine Betriebsgrößensignal (BGS1, BGS2, BGS3, BGS4) eine Regelinformation (RI), eine Rauschkantenpositionsinformation (RKPI), eine Hochtemperatur-Messinformation (HTMI) und/oder eine Höhenstrahlinformation (HSI) aufweist, wobei die Regelinformation (RI) von einer auszuregelnden Störgröße abhängen kann.

2. Radiometrisches Messgerät (1) nach Anspruch 1,
- wobei die Einstelleinheit (5) dazu ausgebildet ist, die zweite Signalverarbeitungseinheit (4b), insbesondere periodisch, wiederholend in die Messeinstellung (ME) und in die mindestens eine Betriebseinstellung (BE1, BE2, BE3, BE4) einzustellen.

3. Radiometrisches Messgerät (1) nach einem der vorhergehenden Ansprüche,
- wobei die erste Signalverarbeitungseinheit (4a) dazu ausgebildet ist, das Sensorsignal (SES) aus einem Zeitfenster (ZF', ZF") in das erste Messgrößensignal (MGSa) zu verarbeiten,
- wobei die zweite Signalverarbeitungseinheit (4b) dazu ausgebildet ist, dasselbe Sensorsignal (SES) aus demselben Zeitfenster (ZF', ZF") in der Messeinstellung (ME) in das zweite Messgrößensignal (MGSb) zu verarbeiten,
- wobei die Einstelleinheit (5) dazu ausgebildet ist, die zweite Signalverarbeitungseinheit (4b) zeitweise in die Messeinstellung (ME) derart einzustellen, dass die zweite Signalverarbeitungseinheit (4b) dasselbe Sensorsignal (SES) aus demselben Zeitfenster (ZF', ZF") in das zweite Messgrößensignal (MGSb) verarbeitet, und
- wobei die Bewertungseinheit (6) dazu ausgebildet ist, das erste Messgrößensignal (MGSa) und das zweite Messgrößensignal (MGSb) verarbeitet aus demselben Sensorsignal (SES) aus demselben Zeitfenster (ZF', ZF") miteinander zu vergleichen.

4. Radiometrisches Messgerät (1) nach einem der vorhergehenden Ansprüche,
- wobei die erste Signalverarbeitungseinheit (4a) dazu ausgebildet ist, das Sensorsignal (SES) ausschließlich in das erste Messgrößensignal (MGSa) zu verarbeiten.

5. Radiometrisches Messgerät (1) nach einem der vorhergehenden Ansprüche,
- wobei die erste Signalverarbeitungseinheit (4a) und/oder die zweite Signalverarbeitungseinheit (4b) jeweils einen Komparator (7a, 7b) und/oder eine monostabile Kippstufe (8a, 8b) aufweisen/aufweist.

6. Radiometrisches Messgerät (1) nach Anspruch 5,
- wobei ein Schwellwert (SW) des Komparators (7b) der zweiten Signalverarbeitungseinheit (4b) zur Messeinstellung (ME) auf einen Messschwellwert (MSW) und zur mindestens einen Betriebseinstellung (BE1, BE2, BE3, BE4) auf mindestens einen von dem Messschwellwert (MSW) verschiedenen Betriebsschwellwert (BSW1, BSW2, BSW3, BSW4) einstellbar ist.

7. Radiometrisches Messgerät (1) nach einem der vorhergehenden Ansprüche,
- wobei die Bewertungseinheit (6) dazu ausgebildet ist, die Rauschkantenpositionsinformation (RKPI) auf Erreichung und/oder Überschreitung eines Rauschkantenpositionsschwellwerts (RKPSW) zu überwachen, und
- wobei die Einstelleinheit (5) dazu ausgebildet ist, in dem Fall der Erreichung und/oder der Überschreitung des Rauschkantenpositionsschwellwerts (RKPSW) ein Verhältnis einer Zeitdauer (ZDB) der Betriebsgrößenzeitintervalle (BZI3) zur Verarbeitung von dem Betriebsgrößensignal (BGS3) aufweisend die Hochtemperatur-Messinformation (HTMI) zu einer Zeitdauer (ZDM) der Messgrößenzeitintervalle (MZI) gegenüber dem Fall der Unterschreitung zu verlängern.

8. Radiometrisches Messgerät (1) nach einem der vorhergehenden Ansprüche,
- wobei die Messgrößenzeitintervalle (MZI) eine von den Betriebsgrößenzeitintervallen (BZI1, BZI2, BZI3, BZI4) verschiedene, insbesondere kürzere, Zeitdauer (ZDM) haben, und/oder
- wobei die Messgrößenzeitintervalle (MZI) eine Zeitdauer (ZDM) von 10 ms bis 300 s haben, und/oder
- wobei die Betriebsgrößenzeitintervalle (BZI1, BZI2, BZI3, BZI4) eine Zeitdauer (ZDB) von 50 ms bis 900 s haben.

9. Radiometrisches Messgerät (1) nach einem der vorhergehenden Ansprüche,
- wobei die optoelektronische Sensoreinrichtung (3) mindestens eine Photodiode, insbesondere mindestens eine Avalanche-Photodiode, insbesondere mindestens ein Array von Photodioden, insbesondere mindestens einen Silizium-Photomultiplier (15), aufweist.

10. Radiometrisches Messgerät (1) nach einem der vorhergehenden Ansprüche, wobei das radiometrische Messgerät (1) aufweist:
- eine Schnittstelle (9), wobei die Schnittstelle (9) dazu ausgebildet ist, das radiometrische Messgerät (1) mit einem Empfänger (10) zur Datenübertragung, insbesondere elektrisch, zu koppeln,
- wobei das radiometrische Messgerät (1) dazu ausgebildet ist, ausschließlich über seine Schnittstelle (9) mit elektrischer Energie versorgt zu werden.

11. Radiometrisches Messgerät (1) nach einem der vorhergehenden Ansprüche, wobei das radiometrische Messgerät (1) aufweist:
- eine Fehlfunktions-Ausgabe- und/oder Übertragungseinheit (11), wobei die Fehlfunktions-Ausgabe- und/oder Übertragungseinheit (11) dazu ausgebildet ist, bei Bewertung der ersten Signalverarbeitungseinheit (4a) und/oder der zweiten Signalverarbeitungseinheit (4b) als fehlerhaft verarbeitend ein Fehlfunktions-Signal (FFS) auszugeben und/oder zu übertragen.

12. Radiometrisches Messgerät (1) nach einem der vorhergehenden Ansprüche,
- wobei das erste Messgrößensignal (MGSa) und das zweite Messgrößensignal (MGSb) einen Messgrößenwert (MGW) der Messgröße (MG) aufweisen, und/oder
- wobei das radiometrische Messgerät (1) dazu ausgebildet ist, basierend auf dem ersten Messgrößensignal (MGSa) und/oder dem zweiten Messgrößensignal (MGSb) einen Messgrößenwert (MGW) der Messgröße (MG) zu bestimmen.

13. Radiometrisches Messgerät (1) nach Anspruch 12, wobei das radiometrische Messgerät (1) aufweist:
- mindestens einen Zähler (12) und/oder mindestens einen Analog-Digital-Umsetzer (13) zur Bestimmung des Messgrößenwerts (MGW) basierend auf dem ersten Messgrößensignal (MGSa) und/oder dem zweiten Messgrößensignal (MGSb).

14. Radiometrisches Messgerät (1) nach einem der vorhergehenden Ansprüche, wobei das radiometrische Messgerät (1) aufweist:
- ein gemeinsames Gehäuse (14),
- wobei in dem gemeinsamen Gehäuse (14) die Szintillatoreinrichtung (2), die optoelektronische Sensoreinrichtung (3), die erste Signalverarbeitungseinheit (4a), die zweite Signalverarbeitungseinheit (4b), die Einstelleinheit (5) und die Bewertungseinheit (6) angeordnet sind.

## Claims

1. Radiometric measuring apparatus (1) for detecting a measurement variable (MG) in the form of a fill level, a limit level, a density and/or a mass flow, wherein the radiometric measuring apparatus (1) has:
- a scintillator device (2), wherein the scintillator device (2) is designed to generate light pulses (LI) upon excitation by ionizing radiation (IS);
- an optoelectronic sensor device (3), wherein the optoelectronic sensor device (3) is designed to convert the light pulses (LI) into a sensor signal (SES);
- a first signal processing unit (4a), wherein the first signal processing unit (4a) is designed to process the sensor signal (SES) into a first measurement variable signal (MGSa);
- a settable second signal processing unit (4b), wherein the second signal processing unit (4b) is designed to process the sensor signal (SES) in a measurement setting (ME) into a second measurement variable signal (MGSb), wherein the second measurement variable signal (MGSb) corresponds to the first measurement variable signal (MGSa) in the case of a faultlessly processing first signal processing unit (4a) and a faultlessly processing second signal processing unit (4b), and to process the sensor signal (SES) in at least one operating setting (BE1, BE2, BE3, BE4) into at least one operating variable signal (BGS1, BGS2, BGS3, BGS4), wherein the at least one operating variable signal (BGS1, BGS2, BGS3, BGS4) does not correspond to the measurement variable signals (MGSa, MGSb),
- a setting unit (5), wherein the setting unit (5) is designed to set the second signal processing unit (4b) in measurement variable time intervals (MZI) into the measurement setting (ME) and in operating variable time intervals (BZI1, BZI2, BZI3, BZI4) that alternate with the measurement variable time intervals (MZI) into the at least one operating setting (BE1, BE2, BE3, BE4); and
- an evaluation unit (6), wherein the evaluation unit (6) is designed to compare the first measurement variable signal (MGSa) and the second measurement variable signal (MGSb) with one another and, depending on a result of the comparison, to evaluate the first signal processing unit (4a) and/or the second signal processing unit (4b) as faultlessly processing or incorrectly processing,
- wherein the first measurement variable signal (MGSa) and the second measurement variable signal (MGSb) each have a measurement information (MI), and
- wherein the at least one operating variable signal (BGS1, BGS2, BGS3, BGS4) has a closed-loop control information (RI), a noise edge position information (RKPI), a hightemperature measurement information (HTMI) and/or a cosmic ray information (HSI), wherein the closed-loop control information (RI) may depend on a disturbance variable to be compensated.

2. Radiometric measuring apparatus (1) according to claim 1,
- wherein the setting unit (5) is designed to set the second signal processing unit (4b), in particular periodically, repeatedly into the measurement setting (ME) and into the at least one operating setting (BE1, BE2, BE3, BE4).

3. Radiometric measuring apparatus (1) according to any of the preceding claims,
- wherein the first signal processing unit (4a) is designed to process the sensor signal (SES) from a time window (ZF', ZF") into the first measurement variable signal (MGSa),
- wherein the second signal processing unit (4b) is designed to process the same sensor signal (SES) from the same time window (ZF', ZF") in the measurement setting (ME) into the second measurement variable signal (MGSb),
- wherein the setting unit (5) is designed to set the second signal processing unit (4b) temporarily into the measurement setting (ME) such that the second signal processing unit (4b) processes the same sensor signal (SES) from the same time window (ZF', ZF") into the second measurement variable signal (MGSb), and
- wherein the evaluation unit (6) is designed to compare the first measurement variable signal (MGSa) and the second measurement variable signal (MGSb) processed from the same sensor signal (SES) from the same time window (ZF', ZF") with one another.

4. Radiometric measuring apparatus (1) according to any of the preceding claims,
wherein the first signal processing unit (4a) is designed to process the sensor signal (SES) only into the first measurement variable signal (MGSa).

5. Radiometric measuring apparatus (1) according to any of the preceding claims,
Wherein the first signal processing unit (4a) and/or the second signal processing unit (4b) each have/has a comparator (7a, 7b) and/or a monostable multivibrator (8a, 8b).

6. Radiometric measuring apparatus (1) according to claim 5,
- wherein a threshold value (SW) of the comparator (7b) of the second signal processing unit (4b) is settable to a measurement threshold value (MSW) for the measurement setting (ME) and to at least one operating threshold value (BSW1, BSW2, BSW3, BSW4) that differs from the measurement threshold value (MSW) for the at least one operating setting (BE1, BE2, BE3, BE4).

7. Radiometric measuring apparatus (1) according to any of the preceding claims,
- wherein the evaluation unit (6) is designed to monitor the noise edge position information (RKPI) for reaching and/or exceeding a noise edge position threshold value (RKPSW), and
- wherein the setting unit (5) is designed, in the case that the noise edge position threshold value (RKPSW) is reached and/or exceeded, to extend a ratio of a time duration (ZDB) of the operating variable time intervals (BZI3) for processing the operating variable signal (BGS3) having the high temperature measurement information (HTMI) to a time duration (ZDM) of the measurement variable time intervals (MZI) relative to the case of a shortfall.

8. Radiometric measuring apparatus (1) according to any of the preceding claims,
- wherein the measurement variable time intervals (MZI) have a time duration (ZDM) different from, in particular shorter than, the operating variable time intervals (BZI1, BZI2, BZI3, BZI4), and/or
- wherein the measurement variable time intervals (MZI) have a time duration (ZDM) from 10 ms to 300 s, and/or
- wherein the operating variable time intervals (BZI1, BZI2, BZI3, BZI4) have a time duration (ZDB) from 50 ms to 900 s.

9. Radiometric measuring apparatus (1) according to any of the preceding claims,
- wherein the optoelectronic sensor device (3) has at least one photodiode, in particular at least one avalanche photodiode, in particular at least one array of photodiodes, in particular at least one silicon photomultiplier (15).

10. Radiometric measuring apparatus (1) according to any of the preceding claims, wherein the radiometric measuring apparatus (1) has:
- an interface (9), wherein the interface (9) is designed to couple the radiometric measuring apparatus (1), in particular electrically, to a receiver (10) for data transmission,
- wherein the radiometric measuring apparatus (1) is designed to be supplied with electrical energy only via its interface (9).

11. Radiometric measuring apparatus (1) according to any of the preceding claims, wherein the radiometric measuring apparatus (1) has:
- a malfunction output and/or transmission unit (11), wherein the malfunction output and/or transmission unit (11) is designed to output and/or transmit a malfunction signal (FFS) upon evaluation of the first signal processing unit (4a) and/or of the second signal processing unit (4b) as incorrectly processing.

12. Radiometric measuring apparatus (1) according to any of the preceding claims,
- wherein the first measurement variable signal (MGSa) and the second measurement variable signal (MGSb) have a measurement variable value (MGW) of the measurement variable (MG), and/or
- wherein the radiometric measuring apparatus (1) is designed to determine a measurement variable value (MGW) of the measurement variable (MG) based on the first measurement variable signal (MGSa) and/or on the second measurement variable signal (MGSb).

13. Radiometric measuring apparatus (1) according to claim 12, wherein the radiometric measuring apparatus (1) has:
- at least one counter (12) and/or at least one analog-to-digital converter (13) for determining the measurement variable value (MGW) based on the first measurement variable signal (MGSa) and/or on the second measurement variable signal (MGSb).

14. Radiometric measuring apparatus (1) according to any of the preceding claims, wherein the radiometric measuring apparatus (1) has:
- a common housing (14),
- wherein the scintillator device (2), the optoelectronic sensor device (3), the first signal processing unit (4a), the second signal processing unit (4b), the setting unit (5) and the evaluation unit (6) are arranged in the common housing (14).

## Revendications

1. Appareil de mesure radiométrique (1) pour acquérir une grandeur de mesure (MG) sous la forme d'un niveau de remplissage, d'une limite, d'une densité et/ou d'un débit massique, sachant que l'appareil de mesure radiométrique (1) présente :
- un dispositif scintillateur (2), sachant que le dispositif scintillateur (2) est conçu pour créer des impulsions lumineuses (LI) par excitation au moyen d'un rayonnement ionisant (IS),
- un dispositif à capteur optoélectronique (3), sachant que le dispositif à capteur optoélectronique (3) est conçu pour transformer les impulsions lumineuses (LI) en un signal de capteur (SES),
- une première unité de traitement des signaux (4a), sachant que la première unité de traitement des signaux (4a) est conçue pour convertir le signal de capteur (SES) en un premier signal de grandeur de mesure (MGSa),
- une seconde unité de traitement des signaux (4b) réglable, sachant que la seconde unité de traitement des signaux (4b) est conçue pour convertir le signal de capteur (SES) dans un réglage de mesure (ME) en un second signal de grandeur de mesure (MGSb), sachant que le second signal de grandeur de mesure (MGSb) correspond au premier signal de grandeur de mesure (MGSa) pour une première unité de traitement des signaux (4a) fonctionnant sans erreur et une seconde unité de traitement des signaux (4b) fonctionnant sans erreur, et pour convertir le signal de capteur (SES) dans au moins un réglage de service (BE1, BE2, BE3, BE4) en au moins un signal de grandeur de service (BGS1, BGS2, BGS3, BGS4), sachant que ledit au moins un signal de grandeur de service (BGS1, BGS2, BGS3, BGS4) ne correspond pas aux signaux de grandeurs de mesure (MGSa, MGSb),
- une unité de réglage (5), sachant que l'unité de réglage (5) est conçue de sorte à régler la seconde unité de traitement des signaux (4b) au réglage de mesure (ME) à des intervalles de grandeurs de mesure (MZI) et audit au moins un réglage de service (BE1, BE2, BE3, BE4) à des intervalles de grandeurs de service (BZI1, BZI2, BZI3, BZI4) alternant avec les intervalles de grandeurs de mesure (MZI), et
- une unité d'évaluation (6), sachant que l'unité d'évaluation (6) est conçue de sorte à comparer entre eux le premier signal de grandeur de mesure (MGSa) et le second signal de grandeur de mesure (MGSb) et à évaluer, comme fonctionnant sans erreur ou de manière erronée, la première unité de traitement des signaux (4a) et/ou la seconde unité de traitement des signaux (4b),
- sachant que le premier signal de grandeur de mesure (MGSa) et le second signal de grandeur de mesure (MGSb) présentent respectivement une information de mesure (MI), et
- sachant que ledit au moins un signal de grandeur de service (BGS1, BGS2, BGS3, BGS4) présente une information de réglage (RI), une information de position du seuil de bruit de fond (RKPI), une information de mesure de haute température (HTMI) et/ou une information de rayonnement cosmique (HSI), sachant que l'information de réglage (RI) peut dépendre d'une grandeur perturbatrice à régler correctement.

2. Appareil de mesure radiométrique (1) selon la revendication 1,
- sachant que l'unité de réglage (5) est conçue de sorte à régler la seconde unité de traitement des signaux (4b), notamment périodiquement, de manière répétée au réglage de mesure (ME) et audit au moins un réglage de service (BE1, BE2, BE3, BE4).

3. Appareil de mesure radiométrique (1) selon une des revendications précédentes,
- sachant que la première unité de traitement des signaux (4a) est conçue de sorte à convertir le signal de capteur (SES) provenant d'une plage horaire (ZF', ZF") en le premier signal de grandeur de mesure (MGSa),
- sachant que la seconde unité de traitement des signaux (4b) est conçue de sorte à convertir le même signal de capteur (SES) provenant de la même plage horaire (ZF', ZF") dans le réglage de mesure (ME) en le second signal de grandeur de mesure (MGSb),
- sachant que l'unité de réglage (5) est conçue de sorte à régler la seconde unité de traitement des signaux (4b) temporairement au réglage de mesure (ME) de manière à ce que la seconde unité de traitement des signaux (4b) traite le même signal de capteur (SES) provenant de la même plage horaire (ZF', ZF") pour le convertir en le second signal de grandeur de mesure (MGSb), et
- sachant que l'unité d'évaluation (6) est conçue de sorte à comparer entre eux le premier signal de grandeur de mesure (MGSa) et le second signal de grandeur de mesure (MGSb) traités à partir du même signal de capteur (SES) provenant de la même plage horaire (ZF', ZF").

4. Appareil de mesure radiométrique (1) selon une des revendications précédentes,
- sachant que la première unité de traitement des signaux (4a) est conçue de sorte à convertir le signal de capteur (SES) exclusivement en le premier signal de grandeur de mesure (MGSa).

5. Appareil de mesure radiométrique (1) selon une des revendications précédentes,
- sachant que la première unité de traitement des signaux (4a) et/ou la seconde unité de traitement des signaux (4b) présentent respectivement un comparateur (7a, 7b) et/ou une bascule monostable (8a, 8b).

6. Appareil de mesure radiométrique (1) selon la revendication 5,
- sachant qu'une valeur seuil (SW) du comparateur (7b) de la seconde unité de traitement des signaux (4b) est réglable pour le réglage de mesure (ME) sur une valeur seuil de mesure (MSW) et pour ledit au moins un réglage de service (BE1, BE2, BE3, BE4) sur ladite au moins une valeur seuil de service (BSW1, BSW2, BSW3, BSW4) différant de la valeur seuil de mesure (MSW).

7. Appareil de mesure radiométrique (1) selon une des revendications précédentes,
- sachant que l'unité d'évaluation (6) est conçue de sorte que l'information de position du seuil de bruit de fond (RKPI) doit être surveillée pour vérifier si elle atteint et/ou dépasse une valeur seuil de la position du seuil de bruit de fond (RKPSW).
- sachant que l'unité de réglage (5) est conçue de sorte à prolonger, en cas d'atteinte ou de dépassement d'une valeur seuil de la position du seuil de bruit de fond (RKPSW), un rapport entre une durée (ZDB) des intervalles de temps de grandeurs de service (BZI3) pour traiter le signal de grandeur de service (BGS3) présentant l'information de mesure de haute température (HTMI) et une durée (ZDM) des intervalles de temps de grandeurs de mesure (MZI), par rapport au cas du sous-dépassement.

8. Appareil de mesure radiométrique (1) selon une des revendications précédentes,
- sachant que les intervalles de temps des grandeurs de mesure (MZI) ont une durée (ZDM) différente, notamment plus courte que les intervalles de temps des grandeurs de service (BZI1, BZI2, BZI3, BZI4), et/ou
- sachant que les intervalles de temps des grandeurs de mesure (MZI) ont une durée (ZDM) de 10 ms à 300 s, et/ou
- sachant que les intervalles de temps des grandeurs de service (BZI1, BZI2, BZI3, BZI4) ont une durée (ZDB) de 50 ms à 900 s.

9. Appareil de mesure radiométrique (1) selon une des revendications précédentes,
- sachant que le dispositif à capteur optoélectronique (3) présente au moins une photodiode, notamment au moins une photodiode à avalanche, notamment au moins une barrette de photodiodes, notamment au moins un photomultiplicateur en silicium (15).

10. Appareil de mesure radiométrique (1) selon une des revendications précédentes, sachant que l'appareil de mesure radiométrique (1) présente :
- une interface (9), sachant que l'interface (9) est conçue de sorte à coupler, notamment électriquement, l'appareil de mesure radiométrique (1) à un récepteur (10) pour la transmission de données,
- sachant que l'appareil de mesure radiométrique (1) est conçu de sorte à être alimenté en énergie électrique exclusivement par le biais de son interface (9).

11. Appareil de mesure radiométrique (1) selon une des revendications précédentes, sachant que l'appareil de mesure radiométrique (1) présente :
- une unité de signalement et/ou de transmission de dysfonctionnements (11), sachant que l'unité de signalement et/ou de transmission de dysfonctionnements (11) est conçue de sorte à émettre et/ou transmettre un signal de dysfonctionnement (FFS) en cas d'évaluation de la première unité de traitement des signaux (4a) et/ou de la seconde unité de traitement des signaux (4b) comme ayant traité de manière erronée.

12. Appareil de mesure radiométrique (1) selon une des revendications précédentes,
- sachant que le premier signal de grandeur de mesure (MGSa) et le second signal de grandeur de mesure (MGSb) présentent une valeur de grandeur de mesure (MGW) de la grandeur de mesure (MG), et/ou
- sachant que l'appareil de mesure radiométrique (1) est conçu de sorte à déterminer une valeur de grandeur de mesure (MGW) de la grandeur de mesure (MG) en se basant sur le premier signal de grandeur de mesure (MGSa) et/ou le second signal de grandeur de mesure (MGSb).

13. Appareil de mesure radiométrique (1) selon la revendication 12, sachant que l'appareil de mesure radiométrique (1) présente :
- au moins un compteur (12) et/ou au moins un convertisseur analogique-numérique (13) pour la détermination de la valeur de grandeur de mesure (MGW) en se basant sur le premier signal de grandeur de mesure (MGSa) et/ou le second signal de grandeur de mesure (MGSb).

14. Appareil de mesure radiométrique (1) selon une des revendications précédentes, sachant que l'appareil de mesure radiométrique (1) présente :
- un boîtier commun (14),
- sachant que le dispositif scintillateur (2), le dispositif à capteur optoélectronique (3), la première unité de traitement des signaux (4a), la seconde unité de traitement des signaux (4b), l'unité de réglage (5) et l'unité d'évaluation (6) sont disposés dans le boîtier commun (14).
